# EUROPEAN PATENT APPLICATION

(11) **EP 4 439 796 A2**
(43) Date of publication of application: **02.10.2024**
(21) Application number: 24165914.3
(22) Date of filing: 25.03.2024
(51) Int. Cl.: H01M 10/613, H01M 10/625, H01M 10/6556, H01M 50/204

(54) **BATTERY MODULE AND BATTERY PACK HAVING THE SAME**

(30) Priority: 26.03.2023 KR 20230039390; 04.05.2023 KR 20230058401
(71) Applicant: Samsung SDI Co., Ltd., Yongin-si, Gyeonggi-do 17084 (KR)
(72) Inventor: Kim, Junseop, 17084 Yongin-si, Gyeonggi-do (KR)
(74) Representative: Gulde & Partner

(57) **Abstract**

A battery module (M) including a plurality of battery cells (10) each having two ends (10a, 10b) and a side surface in a first direction (Z1) between the two ends (10a, 10b) and a case (50) configured to accommodate the plurality of battery cells (10), wherein the case (50) includes first and second holders (H1, H2) coupled to and facing each other with the plurality of battery cells (10) therebetween,
an accommodation tank (T) that is attached to the first and second holders (H1, H2) and has an accommodation section (S4) oriented in a second direction (Z2) toward the side surface of each of the battery cells (10), and flow path sections (S 1, S2, S3) that are different from each other and oriented in different directions.

## Description

### BACKGROUND

### 1. Field

One or more embodiments relate to a battery module and a battery pack having the same.

### 2. Description of the Related Art

In general, secondary batteries can be charged and discharged, unlike primary batteries that cannot be charged. Secondary batteries are used as energy sources for mobile devices, electric vehicles, hybrid vehicles, electric bicycles, uninterruptible power supplies, etc. Also, depending on the type of external devices to which secondary batteries are applied, the secondary batteries may be used in the form of a single battery or a module in which a plurality of batteries are connected and bundled into a unit.

### SUMMARY

Embodiments are directed to a battery module including a plurality of battery cells each having two ends and a side surface in a first direction between the two ends and a case configured to accommodate the plurality of battery cells, wherein the case includes first and second holders coupled to and facing each other with the plurality of battery cells therebetween, an accommodation tank that is attached to the first and second holders and has an accommodation section oriented in a second direction toward the side surface of each of the battery cells, and flow path sections that are different from each other and oriented in different directions.

In embodiments, the flow path sections may include first and second openings included in the first and second holders, respectively, and discharge ducts may be included in the accommodation tank.

In embodiments, the first and second openings may each include one of the flow path sections oriented in the second direction.

In embodiments, the flow path sections of the first and second openings may be parallel to the accommodation section of the accommodation tank.

In embodiments, each of the first and second holders may include an upper plate and a lower plate which face each other in the second direction with the plurality of battery cells therebetween, and the first and second openings may be formed in the upper plate and the lower plate, respectively.

In embodiments, the accommodation tank may be on and overlap the lower plates of the first and second holders in the second direction.

In embodiments the first and second holders may include a pair of first openings included in the upper plate and a pair of second openings included in the lower plate, respectively.

In embodiments, each of the discharge ducts may include a flow path section oriented in the first direction.

In embodiments, the flow path sections may accommodate a flow of a cooling fluid, and the accommodation section may accommodate condensed water together with the flow of the cooling fluid.

In embodiments, the accommodation tank may include an upper portion that may be open in the second direction to provide the accommodation section, and a bottom wall that may be closed.

In embodiments, the bottom wall may not have a drain for discharging condensed water.

In embodiments, the accommodation tank may further include an upper flange surrounding the accommodation section and attached to the first and second holders, and side walls between the upper flange and the bottom wall, and discharge ducts may be included, respectively, on first and second side walls that face each other in the first direction, among the side walls.

In embodiments, each of the first and second side walls may include an inclined surface that may converge toward the discharge ducts of the respective first and second side walls in the first direction.

In embodiments, the battery module may further include first and second circuit boards that may be respectively on a side of the first and second holders opposite the battery cells in the first direction.

In embodiments, first and second sub-bus bars electrically connecting the battery cells to each other may be between the first and second holders and the first and second circuit boards, respectively.

In embodiments, the plurality of battery cells may be in a plurality of columns and rows that respectively include columns in the second direction and rows in a third direction crossing the first and second directions, and a number of columns in the second direction may be greater than a number of rows in the third direction.

In embodiments, the battery cells in adjacent columns may be in patterns reversed to each other in the first direction, and the battery cells in adjacent rows may be in patterns reversed to each other in the first direction.

In embodiments, a row of terminals, which may be electrically connected to the plurality of battery cells to form a charge/discharge path and may include a pair of input/output terminals of different polarities, may be on the first holder among the first and second holders.

Embodiments are directed to a battery pack including a module assembly in which the battery module may be provided in plurality and arranged in a third direction crossing the first and second directions.

In embodiments, the battery pack may further include a first bus bar that may electrically connect adjacent battery modules arranged in the third direction.

In embodiments, the first bus bar may be provided in plurality having lengths equal to each other and extending in the third direction.

In embodiments, the module assembly may be provided in plurality in the first direction.

In embodiments, adjacent battery modules in the third direction may be in a same orientation in the first direction, and adjacent battery modules in the first direction may be in orientations reversed to each other in the first direction.

In embodiments, each of the adjacent battery modules in the third direction may include the first and second holders, which may be in the same front position or the same rear position in the first direction, and each of the adjacent battery modules in the first direction may include first holders and second holders, which may be in different front positions or different rear positions in the first direction.

In embodiments, the module assembly may include first, second, and third module assemblies in the first direction and rows of terminals extending the third direction, the rows of terminals of the first and the second module assemblies may be at relatively far apart positions from each other in the first direction, and the rows of terminals of the second and the third module assemblies may be at relatively close positions to each other in the first direction.

In embodiments, the battery pack may further include a second bus bar that may extend in the first direction and may electrically connect adjacent module assemblies, among the first, second, and third module assemblies, to each other, wherein the second bus bar may include one second bus bar that may extend relatively long in the first direction to electrically connect the rows of terminals of the first and the second module assemblies to each other and another second bus bar that may extend relatively short in the first direction to electrically connect the rows of terminals of the second and the third module assemblies to each other.

In embodiments, the battery pack may further include a frame that may be located adjacent to the module assembly in the first direction.

In embodiments, the frame may include a reinforcing frame located between module assemblies adjacent to each other in the first direction and an end frame located on the outside of an outermost module assembly in the first direction.

In embodiments, the frame may have an insertion portion into which discharge ducts of adjacent battery modules may be inserted.

In embodiments, the reinforcing frame may include first and second surfaces opposite to each other, and the insertion portion may pass through the first and second surfaces and may be symmetrically on the first and second surfaces, and the discharge ducts of the battery module arranged on both sides of the reinforcing frame may be inserted into an identical insertion portion toward the first and second surfaces of the reinforcing frame.

In embodiments, a group of battery modules including the discharge ducts inserted toward the first surface of the reinforcing frame may be arranged in the third direction, and another group of battery modules including the discharge ducts inserted toward the second surface of the reinforcing frame may be arranged in the third direction.

In embodiments, the insertion portion of the frame may include a communication hole fluidly connected to the flow path section of the discharge duct a stopper surrounding at least a portion of the communication hole and along a circumference of an end of the discharge duct and a rib surrounding at least a portion of the stopper and including a stepped portion offset from the stopper in the first direction.

In embodiments, the stepped portion may surround at least a portion of the discharge duct and may prevent movement of the discharge duct.

In embodiments, the communication hole may be fluidly connected to the flow path section of the discharge duct on both sides of the reinforcing frame in the first direction and may form a discharge path that extends across the reinforcing frame through which the communication hole passes in the first direction.

In embodiments, the discharge path may include an open end and a closed another end in the first direction.

In embodiments, the end frame may include first and second end frames which may be respectively on an outside of opposite sides of the module assemblies in the first direction, the first end frame may include the open end of the discharge path and may include a connection duct to which a fluid pump may be connected, and the second end frame may include the closed another end of the discharge path and may not include a hole connected to the discharge path.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

Features will become apparent to those of skill in the art by describing in detail exemplary embodiments with reference to the attached drawings in which:
FIG. 1 is a perspective view of a battery pack according to embodiments of the present disclosure;
FIG. 2 is an exploded perspective view of the battery pack of FIG. 1 and illustrates a plurality of battery modules included in the battery pack;
FIG. 3 is an exploded perspective view of a part of the battery pack of FIG. 2 and illustrates battery modules and a reinforcing frame between the plurality of battery modules;
FIG. 4 is an exploded perspective view showing fitting between an accommodation tank of the battery module and the reinforcing frame of FIG. 3;
FIG. 5 is a perspective view of the accommodation tank of FIG. 4;
FIG. 6 is an exploded perspective view showing the fitting between the accommodation tank and the reinforcing frame of FIG. 4;
FIG. 7 is an exploded perspective view of the battery module of FIG. 3;
FIGS. 8 and 9 are an exploded perspective view showing assembling of an entire module case including first and second holders and the accommodation tank and a perspective view of an assembled module case, respectively, in the battery module according to embodiments of the present disclosure;
FIG. 10 is a view showing a state in which the plurality of battery modules are connected to each other through fittings between accommodation tanks and reinforcing frames;
FIG. 11 is a view showing electrical connections established by bus bars according to embodiments of the present disclosure;
FIG. 12 is a view showing electrical connections established by bus bars according to a comparative example compared with the present disclosure;
FIG. 13 is a view for explaining overall flow of a cooling fluid in a battery pack according to embodiments of the present disclosure;
FIG. 14 is a view for explaining overall flow of a cooling fluid in a battery pack according to other embodiments of the present disclosure;
FIG. 15A shows a result of measuring temperature distribution of the battery pack of FIG. 13 according to embodiments of the present disclosure; and
FIG. 15B shows a result of measuring temperature distribution of the battery pack of FIG. 14 according to other embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. Expressions such as "at least one of," when preceding a list of elements, modify the entire list of elements and do not modify the individual elements of the list.

Hereinafter, a battery module M and a battery pack 100 including the battery module M according to embodiments of the present disclosure are described with reference to the accompanying drawings. Hereinafter, the battery module M according to embodiments of the present disclosure is described first, and then the battery pack 100 including the battery module M is described.

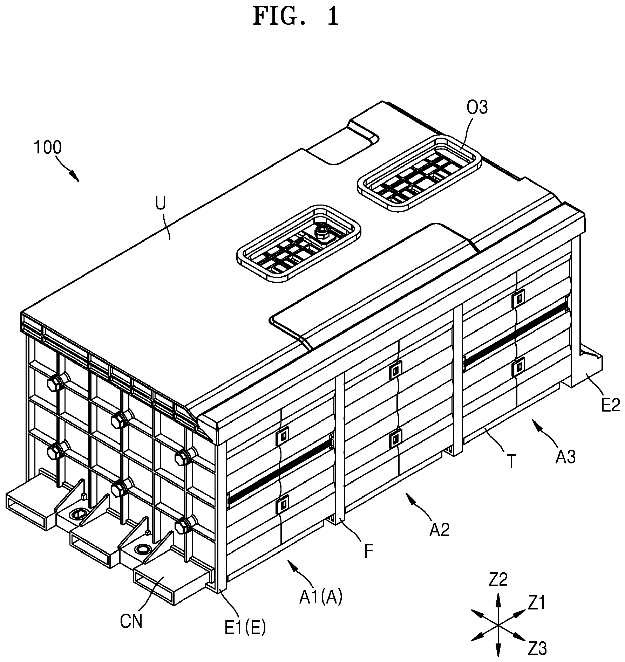

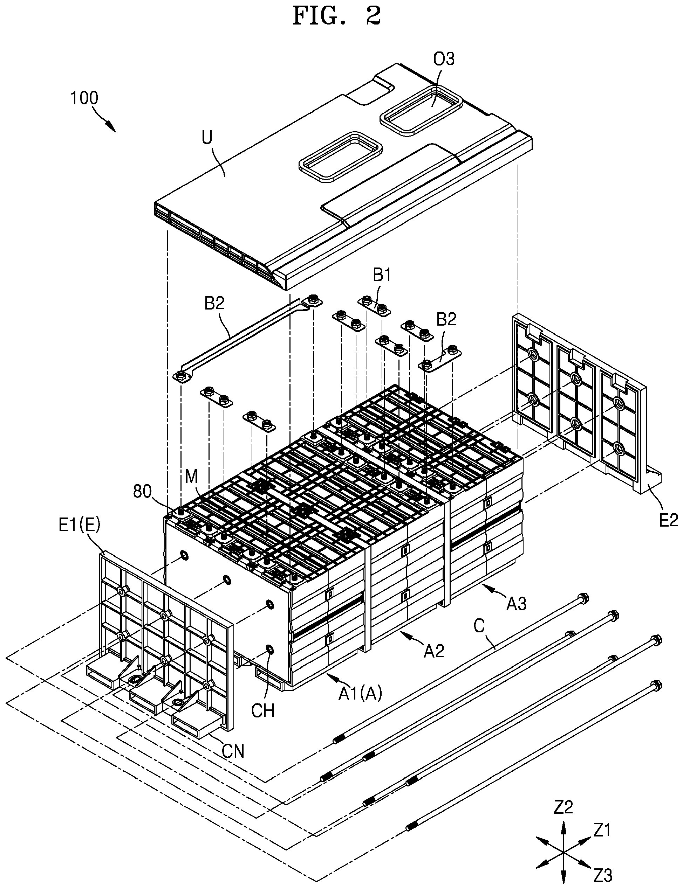

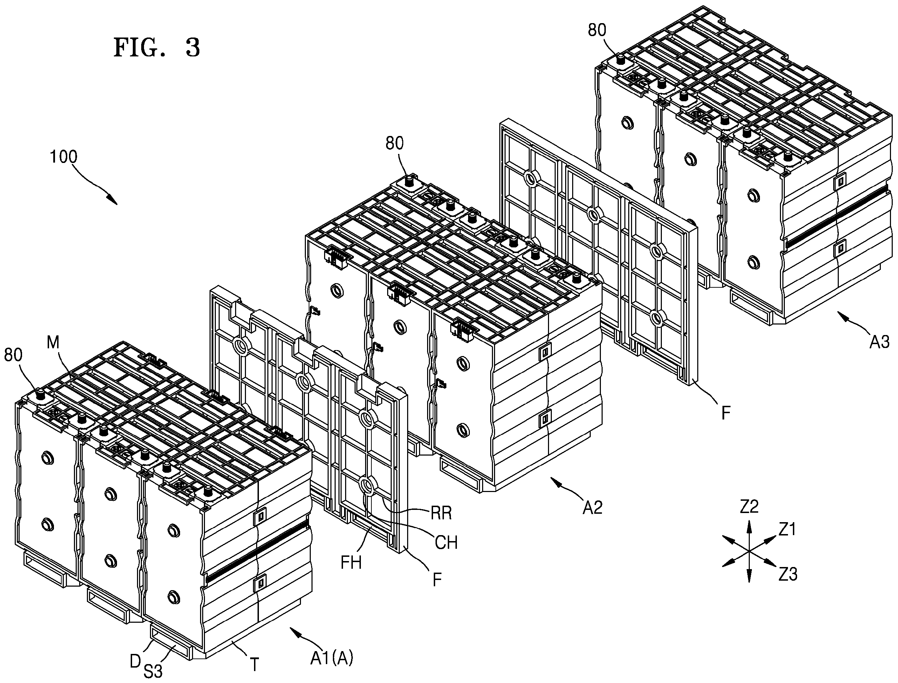

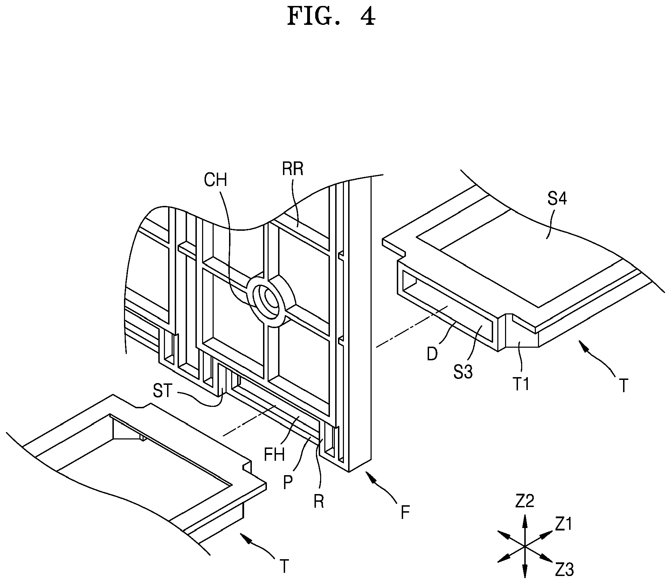

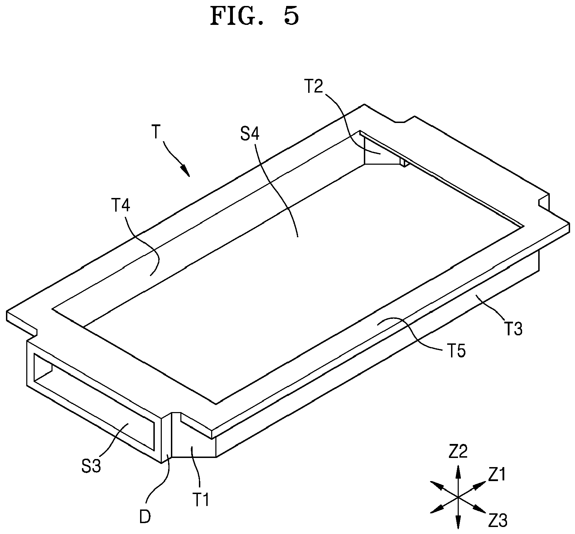

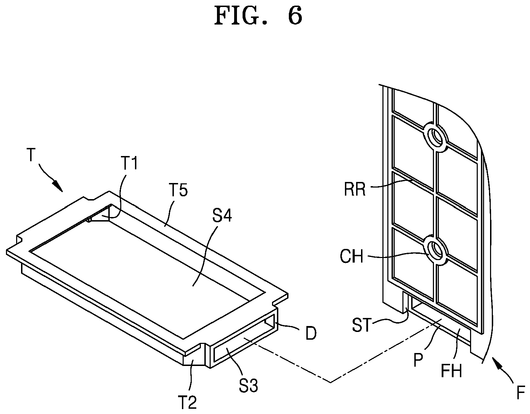

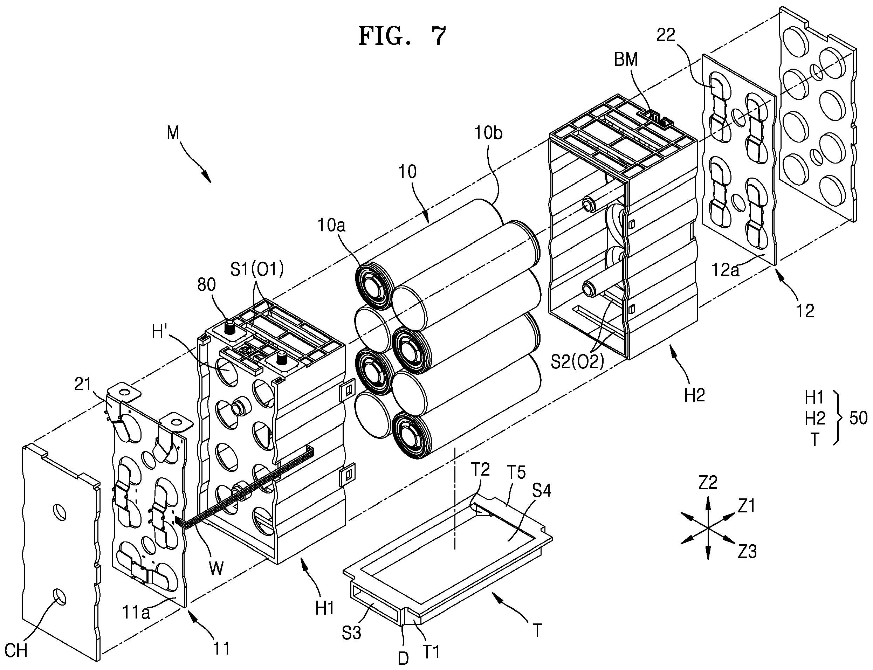

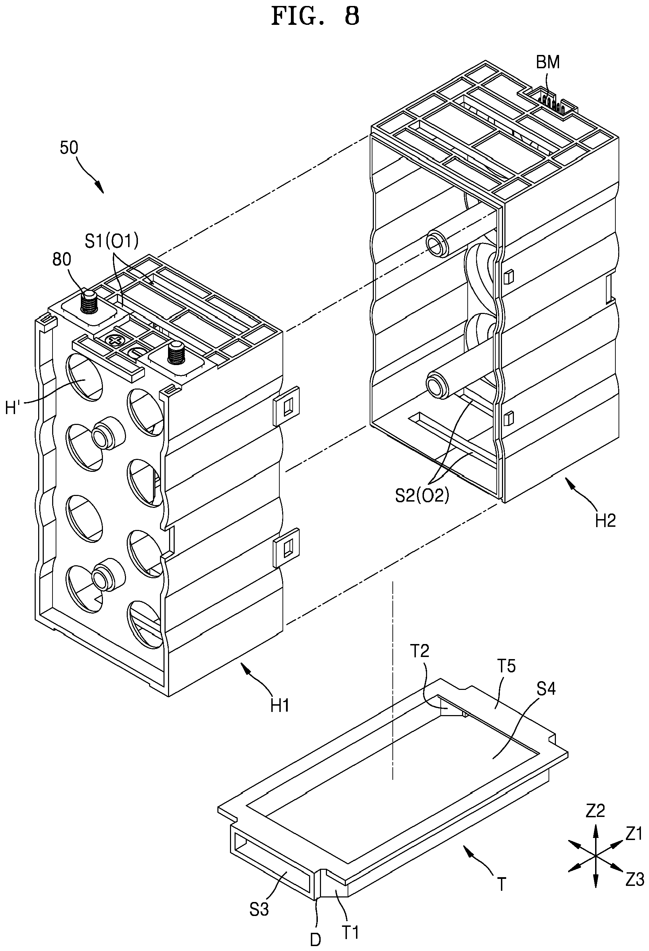

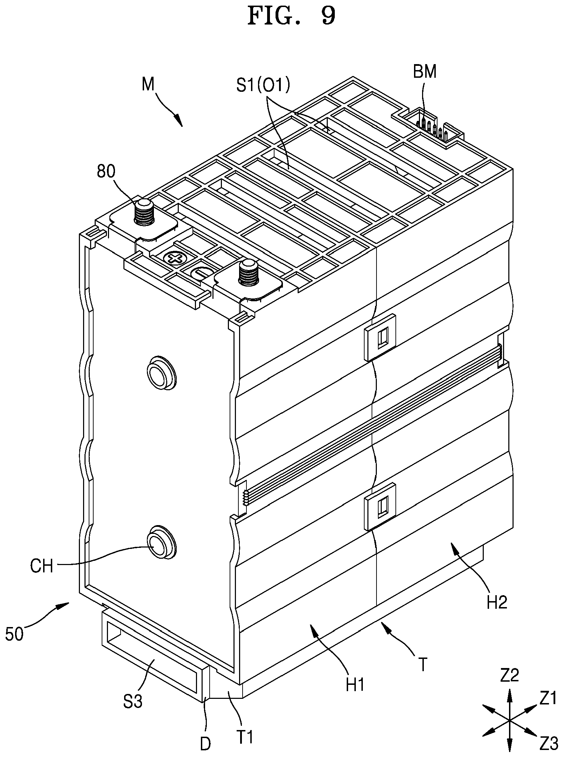

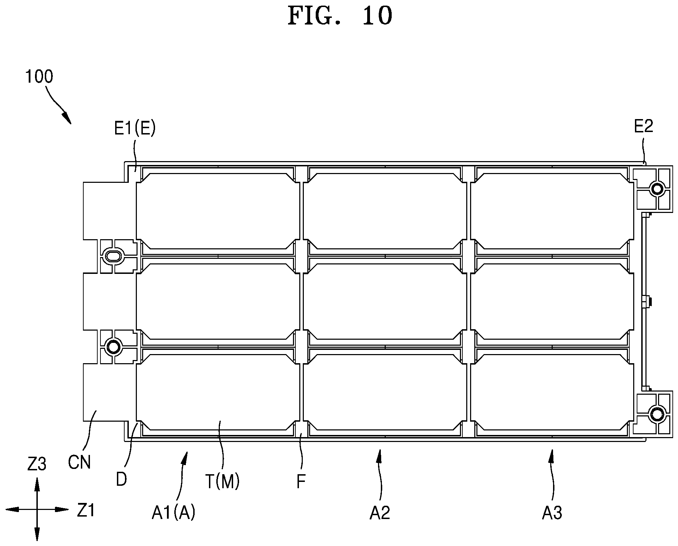

FIG. 1 is a perspective view of the battery pack 100 according to embodiments of the present disclosure. FIG. 2 is an exploded perspective view of the battery pack 100 of FIG. 1 and illustrates the battery pack 100 including a plurality of battery modules M. FIG. 3 is an exploded perspective view of a part of the battery pack 100 of FIG. 2 and illustrates battery modules M and a reinforcing frame F between the battery modules M. FIG. 4 is an exploded perspective view showing fitting between an accommodation tank T of the battery module M and the reinforcing frame F of FIG. 3. FIG. 5 is a perspective view of the accommodation tank T of FIG. 4. FIG. 6 is an exploded perspective view showing the fitting between the accommodation tank T and the reinforcing frame F of FIG. 4. FIG. 7 is an exploded perspective view of the battery module M of FIG. 3. FIGS. 8 and 9 are an exploded perspective view showing assembling of an entire module case 50 including first and second holders H1 and H2 and the accommodation tank T and a perspective view of an assembled module case 50, respectively, in the battery module M according to embodiments of the present disclosure. FIG. 10 is a view showing a state in which the plurality of battery modules M are connected to each other through fittings between accommodation tanks T and reinforcing frames F.

Referring first to FIG. 7, the battery module M according to embodiments of the present disclosure may include a plurality of battery cells 10 each having first and second ends 10a and 10b forming both ends in a first direction Z1 and a side surface between the first and second ends 10a and 10b and the module case 50 for accommodating the plurality of battery cells 10. The module case 50 may include the first and second holders H1 and H2 coupled to face each other in the first direction Z1 with the plurality of battery cells 10 therebetween and the accommodation tank T that may be attached to the first and second holders H1 and H2 and may have an accommodation section S4 facing the side surface of the battery cell 10. First and second openings O1 and O2 may be formed in the module case 50 to form flow path sections S1 and S2 oriented in different directions.

In embodiments of the present disclosure, the battery cell 10 may include first and second electrodes respectively formed on the first and second ends 10a and 10b that form both ends thereof in the first direction Z1 corresponding to the longitudinal direction and may include the side surface formed between the first and second ends 10a and 10b that forms both the ends in the first direction Z1. In embodiments of the present disclosure, the battery cell 10 may include a circular battery cell 10 that has, as a side surface, an outer circumferential surface formed between the first and second ends 10a and 10b at both ends thereof in the first direction Z1.

In embodiments of the present disclosure, the first direction Z1 may correspond to a longitudinal direction in which the battery cell 10 extends and may represent, e.g., a direction, in which the first and second ends 10a and 10b forming both ends of the battery cell 10 face each other, or a direction, in which the first and second electrodes formed at the first and second ends 10a and 10b face each other. As described below, the plurality of battery cells 10 may be arranged in a column direction and a row direction corresponding to second and third directions Z2 and Z3 crossing the first direction Z1. Throughout this specification, the second direction Z2 may represent the column direction in which a relatively large number of battery cells 10 may be arranged in an arrangement of the plurality of battery cells 10, and the third direction Z3 may represent the row direction in which a relatively small number of battery cells 10 may be arranged. In embodiments of the present disclosure, the first to third directions Z1, Z2, and Z3 may represent directions crossing each other and, e.g., may represent directions perpendicularly crossing each other.

The plurality of battery cells 10 may be arranged in a plurality of columns and rows that include a plurality of columns arranged in the second direction Z2 and a plurality of rows arranged in the third direction Z3. In embodiments of the present disclosure, the arrangement of the battery cells 10 may be formed such that the number of columns of the battery cells 10 arranged in the second direction Z2 may be greater than the number of rows of the battery cells 10 arranged in the third direction Z3.

The plurality of battery cells 10 may be physically bound to each other by the module case 50 that includes the first and second holders H1 and H2 assembled facing each other with the plurality of battery cells 10 therebetween. In an implementation, while the assembling positions of the battery cells 10 may be regulated by the first and second holders H1 and H2 in an accommodation space provided by the module case 50, the plurality of battery cells 10 may be physically bound to each other. In an implementation, accommodation parts for accommodating portions of side surfaces of the battery cells 10, e.g., lateral curved portions of the battery cells 10 may be respectively formed in the first and second holders H1 and H2. While the lateral curved portions of the battery cells 10 are respectively accommodated in the accommodation parts formed on the side surfaces of the first and second holders H1 and H2, the assembling position of each of the battery cells 10 may be regulated. Throughout this specification, the accommodation part may represent a part that partially protrudes from a side plate of the module case 50 to accommodate the lateral curved portion of the battery cell 10, and the accommodation part of the module case 50 may accommodate at least a portion of the side surface of the battery cell 10.

The first and second holders H1 and H2 may be assembled to face each other in the first direction Z1 that corresponds to the longitudinal direction of the battery cell 10. In an implementation, while each of the first and second holders H1 and H2 accommodates half of the length of the battery cell 10 in the first direction Z1, the entire length of the battery cell 10 may be accommodated in the first and second holders H1 and H2 assembled to each other by assembling the first and second holders H1 and H2.

Each of the first and second holders H1 and H2 may include upper and lower plates arranged to face each other in the second direction Z2 with the battery cells 10 therebetween and first and second side plates arranged to face each other in the third direction Z3 with the battery cells 10 therebetween. Also, the first and second openings O1 and O2 may be formed on the upper and lower plates of the first and second holders H1 and H2 so as to form the flow path sections S1 and S2 oriented in the second direction Z2, respectively.

In embodiments of the present disclosure, the accommodation tank T may be located on one side of the first and second holders H1 and H2. In an implementation, the accommodation tank T may be attached to the lower plates of the first and second holders H1 and H2. In an implementation, the accommodation tank T may extend across the lower plates of the first and second holders H1 and H2 assembled to each other in the first direction Z1 and form a lower portion of the module case 50 that includes the first and second holders H1 and H2. In embodiments of the present disclosure, the module case 50 may include the first and second holders H1 and H2 coupled to face each other with the battery cells 10 therebetween in the first direction Z1 and the accommodation tank T attached to the lower plates of the first and second holders H1 and H2. In an implementation, the accommodation tank T attached to the lower plates of the first and second holders H1 and H2 may form the lower portion of the module case 50.

In embodiments of the present disclosure, the module case 50 may have the flow path sections S1 and S2 that may be oriented in the second direction Z2 in which a relatively large number of battery cells 10 may be arranged and the accommodation section S4 that may be oriented in the second direction Z2 in which a relatively large number of battery cells 10 may be arranged. Throughout this specification, flow path sections S1, S2, and S3 may represent sections for accommodating the flow of a cooling fluid and may represent surfaces that may be formed in the first and second holders H1 and H2 and a discharge duct D to accommodate the flow of the cooling fluid and open so that the inside and outside of the first and second holders H1 and H2 and the discharge duct D communicate with each other.

Throughout this specification, the accommodation section S4 may represent a section for accommodating the flow of a cooling fluid and condensed water of the cooling fluid and may represent an open surface formed in the accommodation tank T to accommodate the flow of the cooling fluid and the condensed water together. In embodiments of the present disclosure, the first and second holders H1 and H2 may form the flow path sections S1 and S2 oriented in the second direction Z2 in which a relatively large number of battery cells 10 may be arranged, and the accommodation tank T may form the accommodation section S4 oriented in the second direction Z2 in which a relatively large number of battery cells 10 may be arranged. The discharge duct D may form the flow path section S3 oriented in the first direction Z1 substantially parallel to the bottom surface of the accommodation tank T or the surface of the condensed water accumulated in the accommodation tank T. In the entirety of the module case 50 in which the battery cells 10 may be accommodated, the first opening O1 or the flow path section S1 formed in the first opening O1 may function as an inlet for inflow of the cooling fluid, and the discharge duct D or the flow path section S3 formed in the discharge duct D may function as an outlet for outflow of the cooling fluid.

In embodiments of the present disclosure, the first and second openings O1 and O2 of the flow path sections S1 and S2 oriented in the second direction Z2 may be respectively formed on the upper and lower plates of the first and second holders H1 and H2 arranged to face each other in the second direction Z2. The flow in the second direction Z2 may be formed inside the first and second holders H1 and H2, and the flow having at least the second direction Z2 as a main direction may be formed therein. In an implementation, the first opening O1 formed on the upper plates of the first and second holders H1 and H2 may serve as the inlet and the second opening O2 formed on the lower plates of the first and second holders H1 and H2 may serve as the outlet, and thus, the flow in the second direction Z2 may be formed inside the first and second holders H1 and H2.

In embodiments of the present disclosure, the flow discharged to the outside of the first and second holders H1 and H2 through the second opening O2 formed, as an outlet, in the lower plates of the first and second holders H1 and H2 may flow into the accommodation tank T having the accommodation section S4 oriented in the second direction Z2. The flow may be discharged to the outside of the module case 50 through the discharge duct D of the flow path section S3 oriented in the first direction Z1 while the direction of the flow may be changed to the first direction Z1 that may cross the liquid surface of the condensed water accumulated in the accommodation tank T. In embodiments of the present disclosure, the first and second openings O1 and O2 may form the flow path sections S1 and S2 oriented in the second direction Z2 and form the flow in the second direction Z2. In an implementation, the first and second openings O1 and O2 or the flow path sections S1 and S2 formed by the first and second openings O1 and O2 may function as the inlet, through which the cooling fluid flows in the first and second holders H1 and H2, and the outlet, through which the cooling fluid may be discharged to the outside of the first and second holders H1 and H2, respectively. Also, the accommodation section S4 formed in the accommodation tank T may function as an inlet through which the cooling fluid and the condensed water may flow in the accommodation tank T, and the discharge duct D formed in the accommodation tank T may function as an outlet through which the cooling fluid and vaporized condensed water flow out of the accommodation tank T. In embodiments of the present disclosure, the first opening O1 may function as an inlet of the entire module case 50 including the first and second holders H1 and H2 and the accommodation tank T, and the discharge duct D may function as an outlet of the entire module case 50.

Throughout this specification, the fact that the first and second openings O1 and O2 form the flow path sections S1 and S2 oriented in the second direction Z2 may represent that the cross-sectional areas of the first and second openings O1 and O2 become maximized if viewed in the second direction Z2. Also, the above fact may represent that the first and second openings O1 and O2 may be arranged on two-dimensional planes formed by the first and third directions Z1 and Z3 perpendicular to the second direction Z2. The above fact may represent that the flow in the second direction Z2 may be formed through the first and second openings O1 and O2. In an implementation, the flow passing through the first and second openings O1 and O2 may receive minimum flow resistance if passing through the first and second openings O1 and O2 in the second direction Z2 in which the first and second openings O1 and O2 have largest cross-sectional areas, and thus, it may be understood that the first and second openings O1 and O2 form the flow in the second direction Z2.

In embodiments of the present disclosure, the first and second openings O1 and O2 may effectively cool the plurality of battery cells 10 in the second direction Z2, in which a relatively large number of battery cells 10 may be arranged, by the flow of the cooling fluid in the second direction Z2, and the flow of the cooling fluid in the second direction Z2 may be heated from a low-temperature cooling fluid flow to a high-temperature cooling fluid flow by heat exchange with the battery cells 10.

In embodiments of the present disclosure, the battery cells 10 may be arranged such that the number of columns of the battery cells 10 arranged in the second direction Z2 may be relatively greater than the number of rows of the battery cells 10 arranged in the third direction Z3. In order to form the flow of cooling fluid in the second direction Z2 in which a relatively large number of battery cells 10 may be arranged, the first and second openings O1 and O2 formed in the first and second holders H1 and H2 and the flow path sections S1 and S2 in which the first and second openings O1 and O2 may be formed may be oriented in the second direction Z2.

In embodiments of the present disclosure, the flow of the cooling fluid in the first and second holders H1 and H2 may be made in the second direction Z2 through the first and second openings O1 and O2 oriented in the second direction Z2 or through the flow path sections S1 and S2 formed by the first and second openings O1 and O2. The flow of the cooling fluid may be formed in the first and second holders H1 and H2 in at least the second direction Z2 as a main direction. The flow of the cooling fluid in the second direction Z2 as the main direction inside the first and second holders H1 and H2 may be changed to the first direction Z1 inside the accommodation tank T through the accommodation section S4 of the accommodation tank T and may be discharged to the outside of the module case 50 through the discharge duct D oriented in the first direction Z1 or through the flow path section S3 of the discharge duct D. In an implementation, the flow of the cooling fluid in the second direction Z2 inside the first and second holders H1 and H2 may be changed to the first direction Z1 along the liquid surface of the condensed water accumulated in the accommodation tank T and may be discharged to the outside of the module case 50 through the discharge duct D of the accommodation tank T forming the flow path section S3 oriented in the first direction Z1.

The accommodation tank T may include the accommodation section S4 oriented in the second direction Z2. The fact that the accommodation section S4 of the accommodation tank T may be oriented in the second direction Z2 may represent that the accommodation section S4 may form the largest cross-sectional area if viewed in the second direction Z2. Also, the above fact may represent that the accommodation section S4 may be located on a plane in the first and third directions Z1 and Z3 perpendicular to the second direction Z2. In an implementation, the accommodation tank T may accommodate the condensed water that falls from the battery cells 10 arranged above the accommodation tank T in the second direction Z2 through the accommodation section S4. If the relatively low-temperature cooling fluid and the relatively high-temperature battery cells 10 come into contact with each other and the condensed water falls in the second direction Z2, the condensed water falling in the second direction Z2 may be accommodated through the accommodation section S4 oriented in the second direction Z2. In embodiments of the present disclosure, the condensed water falling in the second direction Z2 may be accommodated by the accommodation tank T that has the accommodation section S4 oriented in the second direction Z2. The condensed water may be accommodated without omission by the accommodation section S4 that may be arranged to form the largest cross-sectional area if viewed in the second direction Z2.

In embodiments of the present disclosure, the level of the condensed water accommodated in the accommodation tank T may rise as the condensed water accumulates, and the condensed water may flow in the first and second holders H1 and H2 through the first opening O1 so as not to exceed the accommodation limit of the accommodation tank T and may flow in the second direction Z2 inside the first and second holders H1 and H2. Also, the condensed water may be naturally evaporated by the high-temperature cooling fluid that flows in the accommodation tank T from the first and second holders H1 and H2 through the second opening O2 oriented in the second direction Z2. In embodiments of the present disclosure, rather than being discharged through a drain formed in the accommodation tank T, the condensed water accommodated in the accommodation tank T may be naturally discharged to the outside of the module case 50 while being evaporated by the high-temperature cooling fluid that flows in the accommodation section S4 in the second direction Z2 through the first and second openings O1 and O2 that form the flow path sections S1 and S2 oriented in the second direction Z2.

In embodiments of the present disclosure, the high-temperature cooling fluid flowing into the accommodation tank T from the first and second holders H1 and H2 in the second direction Z2 may be blocked by the liquid surface of the condensed water in the accommodation tank T, and thus, the flow direction thereof may be changed into the first direction Z1. Also, the high-temperature cooling fluid may contain vaporized condensed water while flowing along the liquid surface of the condensed water at a position adjacent to the liquid surface of the condensed water. In an implementation, the high-temperature cooling fluid may be discharged to the outside together with condensed water through the discharge duct D of the accommodation tank T oriented in the first direction Z1.

In embodiments of the present disclosure, the flow of the cooling fluid in the second direction Z2 may be formed inside the module case 50 through the first and second holders H1 and H2 respectively having the flow path sections S1 and S2 oriented in the second direction Z2. Also, the flow of the cooling fluid in the second direction Z2 and the condensed water falling in the second direction Z2 may be accommodated through the accommodation tank T having the accommodation section S4 oriented in the second direction Z2. The cooling fluid flowing in the second direction Z2 may induce evaporation of the condensed water through contact with the liquid surface as wide as possible while flowing in the first direction Z1 along the liquid surface of the condensed water, and thus, it may be possible to control the water level of the liquid surface of the condensed water accumulated in the accommodation tank T so that the condensed water does not exceed the accommodation limit of the accommodation tank T.

In embodiments of the present disclosure, the accommodation tank T may include the accommodation section S4 oriented in the second direction Z2 and the flow path section S3 (the discharge duct D) oriented in the first direction Z1, and thus, the high-temperature cooling fluid flowing into the accommodation tank T in the second direction Z2 through the accommodation section S4 may be discharged from the accommodation tank T through the flow path section S3 (the discharge duct D) in the first direction Z1. In an implementation, the high-temperature cooling fluid may contain vaporized condensed water while moving along the liquid surface of the condensed water in the first direction Z1 and may be discharged to the outside of the accommodation tank T together with the vaporized condensed water through the flow path section S3 (the discharge duct D). The fact that the accommodation tank T includes the accommodation section S4 oriented in the second direction Z2 and the flow path section S3 (the discharge duct D) oriented in the first direction Z1 may represent that the inflow of the cooling fluid and the condensed water in the second direction Z2 and the outflow of the cooling fluid in the first direction Z1 may be formed with respect to the accommodation tank T. In embodiments of the present disclosure, the above fact may represent that the inflow of both condensed water and cooling fluid directly approaching the liquid surface of the condensed water in the second direction Z2 and the outflow of the cooling fluid moving along the liquid surface of the condensed water in the first direction Z1 may be formed with respect to the accommodation tank T.

In embodiments of the present disclosure, the fact that the accommodation section S4 of the accommodation tank T may be oriented in the second direction Z2 may represent that the accommodation tank T may be open on one side (e.g., the upper side) in the second direction Z2. The accommodation section S4 of the accommodation tank T may be provided as an open surface of the accommodation tank T. In an implementation, the accommodation section S4 of the accommodation tank T may be formed on a plane formed by the first and third directions Z1 and Z3. As described below, an upper flange T5 attached to the lower plates of the first and second holders H1 and H2 may be formed at an upper end of the accommodation tank T. The accommodation section S4 may be formed as an upper open portion surrounded by the upper flange T5 of the accommodation tank T.

The fact that the flow path section S3 of the accommodation tank T may be oriented in the first direction Z1 may represent that the discharge duct D having the flow path section S3 oriented in the first direction Z1 may be formed in the accommodation tank T. In an implementation, the flow path section S3 of the discharge duct D may be formed on a plane formed by the second and third directions Z2 and Z3. In embodiments of the present disclosure, the accommodation tank T may include a bottom wall and side walls surrounding the bottom wall, and the side walls may include first and second side walls T1 and T2 facing each other in the first direction Z1 and third and fourth side walls T3 and T4 facing each other in the third direction Z3. In an implementation, discharge ducts D having flow path sections S3 oriented in first direction Z1 may be respectively formed on the first and second side walls T1 and T2 of the accommodation tank T, and the discharge duct D may be formed on each of the first and second side walls T1 and T2 facing each other in the first direction Z1 and may form the flow path section S3 oriented in the first direction Z1. Throughout this specification, regarding the flow of the cooling fluid surrounding the accommodation tank T, the inflow of the cooling fluid in the second direction Z2 and the outflow of the cooling fluid in the first direction Z1 may be understood as that the cooling fluid flows in through the open upper portion of the accommodation tank T and may be then discharged to the outside of the module case 50 through the discharge duct D opened in the first direction Z1 while moving along the liquid surface of the condensed water in the first direction Z1.

In embodiments of the present disclosure, the first and second side walls T1 and T2 facing each other in the first direction Z1 of the accommodation tank T forming the lower portion of the battery module M may have the flow path sections S3 oriented in the first direction Z1, and the discharge ducts D respectively forming the flow path sections S3 may have a shape linearly extending in the first direction Z1 to form the flow path sections S3. In embodiments of the present disclosure, the flow path section S3 formed by the discharge duct D may represent a section of the discharge duct D extending in the first direction Z1 and may represent a section perpendicular to the first direction Z1.

Each of the first and second side walls T1 and T2 formed around the discharge ducts D may be formed as inclined surfaces having slopes converging toward the discharge duct D. In an implementation, each of the first and second side walls T1 and T2 formed around the discharge ducts D may include a pair of inclined surfaces formed on both sides of the discharge duct D in a shape converging toward each other around the discharge duct D and may be formed in a symmetrical shape with respect to the discharge duct D. In embodiments of the present disclosure, the first and second side walls T1 and T2 including inclined surfaces converging toward the discharge ducts D in the first direction Z1 around the discharge ducts D may be provided in a shape converging toward the discharge ducts D in the first direction Z1 so as to facilitate fitting between the discharge ducts D of the battery modules M and insertion portions of frames F and E (see FIGS. 5 and 6). In an implementation, the fitting between the discharge ducts D of the battery modules M and the insertion portions of the frames F and E may be easily established through a pressing operation in the first direction Z1, and the first and second side walls T1 and T2 including the inclined surfaces formed around the discharge ducts D may guide assembling positions between the discharge ducts D and the insertion portions of the frames F and E.

In embodiments of the present disclosure, the plurality of battery modules M arranged in the first direction Z1 may be fluidly connected to each other by the discharge ducts D that may be fluidly connected in the first direction Z1 (see FIG. 10). In an implementation, the plurality of battery modules M arranged in the first direction Z1 may form a discharge path that follows the first direction Z1 by the discharge ducts D fluidly connected to each other in the first direction Z1 and the accommodation tanks T connected to the discharge ducts D. In embodiments of the present disclosure, the discharge path may be formed to pass through lower portions of the plurality of battery modules M arranged in the first direction Z1 and may refer to a path through which the flow of the cooling fluid passing through each of the battery modules M arranged in the first direction Z1 may be collected on the discharge path and the flow of the cooling fluid discharged through each of the battery modules M may be discharged to the outside of the battery pack 100.

The bottom wall of the accommodation tank T may include a flat plane or may include an inclined surface as illustrated in FIG. 5. In an implementation, the bottom wall of the accommodation tank T may include an inclined surface that has a gradient in the second direction Z2 along the third direction Z3. In an implementation, the bottom wall of the accommodation tank T may include a trough in which the condensed water flowing in through the accommodation section S4 of the accommodation tank T may be accumulated. In embodiments of the present disclosure, the trough may extend along the flow of the cooling fluid in the first direction Z1 while extending parallel to the first direction Z1. As described above, in embodiments of the present disclosure, the accumulation position of the condensed water may be defined by the bottom wall of the accommodation tank T including the trough that may be advantageous for the accumulation of the condensed water. Therefore, it may be possible to limit the uncontrolled flow of condensed water through the accumulation of condensed water and to stably form the accumulation of condensed water. In an implementation, the condensed water flowing in through the accommodation section S4 of the accommodation tank T may flow toward the trough of the accommodation tank T along the gradient formed on the bottom wall of the accommodation tank T and may accumulate in the trough to form the liquid surface of the condensed water in the trough. As the condensed water accumulates, the liquid surface of the condensed water may spread from the trough formed on one side of the accommodation tank T toward another side of the accommodation tank T in the third direction Z3. In various embodiments of the present disclosure, the accommodation tank T may have a structure for accumulating the condensed water falling from the battery cells 10 in the second direction Z2 or may at least prevent the condensed water that has fallen from the battery cell 10 from flowing out in the second direction Z2. The condensed water may flow along the discharge path formed in the first direction Z1 through the discharge duct D connected to the accommodation tank T and then evaporate while contacting the flow of the high-temperature cooling fluid. Therefore, the flow path section S3 formed by the discharge duct D may accommodate the flow of condensed water together with the flow of the high-temperature cooling fluid.

Referring to FIG. 7, first and second circuit units 11 and 12 may be arranged on the first and second holders H1 and H2, respectively, in the first direction Z1. The first and second circuit units 11 and 12 may be electrically connected to each other through a connection wire W located therebetween. The first circuit unit 11 may include a first sub-bus bar 21 connected to the first electrodes of the battery cells 10 corresponding to terminal holes H' of the first holder H1 and a first circuit board 11a establishing an electrical connection with the first sub-bus bar 21. Similarly, the second circuit unit 12 may include a second sub-bus bar 22 connected to the second electrodes of the battery cells 10 corresponding to terminal holes H' of the second holder H2 and a second circuit board 12a establishing an electrical connection with the second sub-bus bar 22. The first and second circuit units 11 and 12 may measure state information of the battery cells 10, such as the voltage or temperature of the battery cells 10, through the connection between the first and second sub-bus bars 21 and 22 and the first and second circuit boards 11a and 12a, respectively. While the first and second circuit units 11 and 12 are electrically connected to each other through the connection wire W therebetween, the state information measured by any one of the first and second circuit units 11 and 12 may be collected in the other circuit unit. The state information collected as described above may be transmitted to a battery management system (hereinafter referred to as a BMS).

In embodiments of the present disclosure, the connection wire W extending from the first circuit board 11a toward the second circuit board 12a in the first direction Z1 may be connected to the first circuit board 11a, and a connector may be formed at an extended end of the connection wire W extending toward the second circuit board 12a. In an implementation, the connector formed at the extended end of the connection wire W extending from the first circuit board 11a may be coupled to a connector of the second circuit board 12a. Also, the second circuit board 12a may collect the state information measured autonomously and the state information transmitted from the first circuit board 11a and may then transmit the collected state information to the BMS (not shown). To this end, a BMS connector BM may be formed on the second circuit board 12a.

In embodiments of the present disclosure, in the battery module M, all of the battery cells 10 forming the battery module M may be connected in series through first sub-bus bars 21 electrically connecting first ends 10a of the battery cells 10 to each other and second sub-bus bars 22 electrically connecting second ends 10b of the battery cells 10 to each other. In an implementation, the battery cells 10 may be arranged in four columns in the second direction Z2 and two rows in the third direction Z3. Therefore, each of the battery modules M may include a total of eight battery cells 10, and all eight battery cells 10 forming the battery module M may be connected in series. In embodiments of the present disclosure, the first ends 10a of the battery cells 10 adjacent to each other in the second direction Z2 and the second ends 10b of the battery cells 10 adjacent to each other in the second direction Z2 may have polarities opposite to each other. Similarly, the first ends 10a of the battery cells 10 adjacent to each other in the third direction Z3 and the second ends 10b of the battery cells 10 adjacent to each other in the third direction Z3 may have polarities opposite to each other. Throughout this specification, the fact that the first ends 10a or the second ends 10b of the battery cells 10 adjacent to each other have opposite polarities may represent that the first electrodes formed on the first ends 10a and the second electrodes formed on the second ends 10b have polarities opposite to each other. Throughout this specification, the first and second ends 10a and 10b of the battery cells 10 or the first and second electrodes respectively formed on the first and second ends 10a and 10b may be classified according to the arrangement of the battery cells 10 rather than according to polarities. Among both ends of each of the battery cells 10, an end relatively adjacent to the first holder H1 may correspond to the first end 10a, and an end relatively adjacent to the second holder H2 may correspond to the second end 10b. Also, the electrodes formed on the first and second ends 10a and 10b may correspond to the first and second electrodes, respectively.

In embodiments of the present disclosure, the battery cells 10 adjacent to each other in the second and third directions Z2 and Z3 may be arranged in orientations reversed to each other, and thus, the first electrodes of the battery cells 10 adjacent to each other in the second and third directions Z2 and Z3 may have polarities opposite to each other. Also, the second electrodes of the battery cells 10 adjacent to each other in the second and third directions Z2 and Z3 may also have polarities opposite to each other. All of the battery cells 10 constituting the battery module M may be connected in series by the first sub-bus bars 21 connecting the first electrodes of adjacent battery cells 10 having opposite polarities to each other and the second sub-bus bar 22 connecting the second electrodes of adjacent battery cells 10 having opposite polarities to each other. In an implementation, in the electrical arrangement of the battery cells 10 electrically connected in series to each other, the highest potential electrode (corresponding to the first electrode) and the lowest potential electrode (corresponding to the first electrode) may be arranged in the same orientation in the first direction Z1. In embodiments of the present disclosure, the above electrodes may be arranged on the side of the first holder H1 in the first direction Z1. An input/output terminal 80 may be connected to the highest potential electrode (corresponding to the first electrode) and the lowest potential electrode (corresponding to the first electrode) forming both ends in the arrangement of battery cells 10 electrically connected to each other, the input/output terminal 80 of the battery module M may be formed on the side of the first holder H1.

Referring to FIG. 3, the battery pack 100 according to embodiments of the present disclosure may include a module assembly A in which the battery modules M as shown in FIG. 7 may be arranged in the third direction Z3. The input/output terminals 80 respectively formed in the battery modules M may form a row of terminals (or referred to as a terminal row 80) while forming a row in the third direction Z3. In an implementation, in the module assembly A including the plurality of battery modules M arranged in the third direction Z3, the row of input/output terminals 80 arranged in the third direction Z3, which may be referred to as the row of terminals 80, may be formed on the side of the first holder H1 in the first direction Z1. As described below, first to third module assemblies A1, A2, and A3 arranged in the first direction Z1 may be arranged in an orientation in which adjacent module assemblies A may be reversed from each other. Therefore, each of the first module assembly A1 and the third module assembly A3 may include the first holder H1 located at a front position of each of the module assemblies A in the first direction Z1 and the second holder H2 located at a rear position of each of the module assemblies A and may also include the row of terminals 80 formed on the side of the first holder H1 at the front position. The second module assembly A2 may be located in an orientation reversed to those of the first and third module assemblies A1 and A3 adjacent to each other in the first direction Z1. In an implementation, the second module assembly A2 may include the second holder H2 located at the front position, e.g., adjacent to the first module assembly A1, of the second module assembly A2 and the first holder H1 located at the rear position, e.g., adjacent to the third module assembly A3, of the second module assembly A2.

Therefore, the second module assembly A2 may include the row of terminals 80 located on the side of the first holder H1 at the rear position. As described above, in the first to third module assemblies A1, A2, and A3 arranged in the first direction Z1, the rows of terminals 80 (or referred to as the terminal rows 80) of the first and second module assemblies A1 and A2 may be formed at relatively far apart positions in the first direction Z1, and the row of terminals 80 of the second and third module assemblies A2 and A3 may be formed at relatively close positions in the first direction Z1. In an implementation, the terminal rows 80 of the first and second module assemblies A1 and A2 arranged at relatively far apart positions in the first direction Z1 may be electrically connected to each other through a second bus bar B2 (see FIG. 2) extending relatively long in the first direction Z1. Also, the terminal rows 80 of the second and third module assemblies A2 and A3 arranged at relatively close positions in the first direction Z1 may be electrically connected to each other through a second bus bar B2 (see FIG. 2) extending relatively short in the first direction Z1.

The first to third module assemblies A1, A2, and A3 arranged in the first direction Z1 may be arranged in orientations reversed to each other. In embodiments of the present disclosure, the first and second module assemblies A1 and A2 adjacent to each other in the first direction Z1 may be arranged in orientations reversed to each other. In an implementation, the first and second holders H1 and H2 of the first and second module assemblies A1 and A2 may have a symmetrical arrangement with each other with respect to the reinforcing frame F between the first and second module assemblies A1 and A2. In an implementation, with respect to the reinforcing frame F, the first holders H1 of the first and second module assemblies A1 and A2 may have a symmetrical arrangement with each other, and the second holders H2 of the first and second module assemblies A1 and A2 may have a symmetrical arrangement with each other. Similarly, the second and third module assemblies A2 and A3 adjacent to each other in the first direction Z1 may be arranged in orientations reversed to each other, and the second and third module assemblies A2 and A3 may be arranged in a symmetrical orientation with respect to the reinforcing frame F therebetween. In an implementation, the first holders H1 of the second and third module assemblies A2 and A3 may have a symmetrical arrangement with respect to the reinforcing frame F, and the second holders H2 of the second and third module assemblies A2 and A3 may have a symmetrical arrangement with respect to the reinforcing frame F. The configuration in which the three adjacent module assemblies A of the first to third module assemblies A1, A2, and A3 arranged in the first direction Z1 may be arranged in orientations reversed to each other may indicate that the first module assembly A1 and the third module assembly A3 may be arranged in the same orientation, and the second module assembly A2 between the first and third module assemblies A1 and A3 may be located in an reversed orientation. In an implementation, the first holders H1 of the first and third module assemblies A1 and A3 may be arranged on the front side thereof in the first direction Z1, and the second holders H2 of the first and third module assemblies A1 and A3 may be arranged on the rear side thereof. However, the first holder H1 of the second module assembly A2 may be located on the rear side thereof, and the second holder H2 of the second module assembly A2 may be located on the front side thereof. In embodiments of the present disclosure, the terminal row 80 formed on the side of the first holder H1 of the first module assembly A1 may be formed on the front side of the first module assembly A1, the terminal row 80 formed on the side of the first holder H1 of the second module assembly A2 may be formed on the rear side of the second module assembly A2, and the terminal row 80 formed on the side of the first holder H1 of the third module assembly A3 may be formed on the front side of the third module assembly A3. Therefore, in embodiments of the present disclosure, the terminal rows 80 of the first and second module assemblies A1 and A2 adjacent to each other in the first direction Z1 may be arranged relatively far from each other, and the terminal rows 80 of the second and third module assemblies A2 and A3 adjacent to each other in the first direction Z1 may be arranged relatively close to each other.

FIG. 2 is an exploded perspective view of the battery pack 100 according to embodiments of the present disclosure. The battery pack 100 in FIG. 2 may include at least two battery modules M. The battery module M may have substantially the same structure as that described with reference to FIG. 7, and repeated descriptions thereof are omitted.

The battery pack 100 may include the plurality of battery modules M arranged in the first and third directions Z1 and Z3. The battery pack 100 according to embodiments of the present disclosure may include three rows of battery modules M arranged in the first direction Z1 and three rows of battery modules M arranged in the third direction Z3, and may include a total of nine battery modules M that forms a 3x3 array in the first and third directions Z1 and Z3 overall. In this specification, for convenience of understanding, the plurality of battery modules M arranged in the third direction Z3 may be referred to as the module assembly A. In an implementation, the battery pack 100 may include the module assembly A in which three battery modules M may be arranged in the third direction Z3 and may include the first to third module assemblies A1, A2, and A3 in the first direction Z1. In embodiments of the present disclosure, the reinforcing frame F may be located between module assemblies A adjacent to each other in the first direction Z1. In an implementation, the reinforcing frames F may be located between the first and second module assemblies A1 and A2 and between the second and third module assemblies A2 and A3. Also, an end frame E (see FIG. 2) may be located at each of the outermost positions of the battery pack 100 in the first direction Z1. In an implementation, the end frames E may be arranged in front of the first module assembly A1 disposed at the front position in the first direction Z1 and behind the third module assembly A3 disposed at the rear position in the first direction Z1.

As described above, the first to third module assemblies A1, A2, and A3 arranged in the first direction Z1 may be arranged in orientations reversed to each other. In embodiments of the present disclosure, the first and second module assemblies A1 and A2 adjacent to each other in the first direction Z1 may be arranged in orientations reversed to each other. In an implementation, the first and second holders H1 and H2 of the first and second module assemblies A1 and A2 may have a symmetrical arrangement with each other with respect to the reinforcing frame F between the first and second module assemblies A1 and A2. In an implementation, with respect to the reinforcing frame F, the first holders H1 of the first and second module assemblies A1 and A2 may have a symmetrical arrangement with each other, and the second holders H2 of the first and second module assemblies A1 and A2 may have a symmetrical arrangement with each other. Similarly, the second and third module assemblies A2 and A3 adjacent to each other in the first direction Z1 may be arranged in orientations revered to each other, and the second and third module assemblies A2 and A3 may be arranged in a symmetrical orientation with respect to the reinforcing frame F therebetween. In an implementation, the first holders H1 of the second and third module assemblies A2 and A3 may have a symmetrical arrangement with respect to the reinforcing frame F, and the second holders H2 of the second and third module assemblies A2 and A3 may have a symmetrical arrangement with respect to the reinforcing frame F. The configuration in which the three adjacent module assemblies A of the first to third module assemblies A1, A2, and A3 arranged in the first direction Z1 may be arranged in orientations reversed to each other may indicate that the first module assembly A1 and the third module assembly A3 may be arranged in the same orientation, and the second module assembly A2 between the first and third module assemblies A1 and A3 may be located in an reversed orientation. In an implementation, the first holders H1 of the first and third module assemblies A1 and A3 may be arranged on the front side thereof in the first direction Z1, and the second holders H2 of the first and third module assemblies A1 and A3 may be arranged on the rear side thereof. However, the first holder H1 of the second module assembly A2 may be located on the rear side thereof, and the second holder H2 of the second module assembly A2 may be located on the front side thereof. In embodiments of the present disclosure, the terminal row 80 formed on the side of the first holder H1 of the first module assembly A1 may be formed on the front side of the first module assembly A1, the terminal row 80 formed on the side of the first holder H1 of the second module assembly A2 may be formed on the rear side of the second module assembly A2, and the terminal row 80 formed on the side of the first holder H1 of the third module assembly A3 may be formed on the front side of the third module assembly A3. Therefore, in embodiments of the present disclosure, the terminal rows 80 of the first and second module assemblies A1 and A2 adjacent to each other in the first direction Z1 may be arranged relatively far from each other, and the terminal rows 80 of the second and third module assemblies A2 and A3 adjacent to each other in the first direction Z1 may be arranged relatively close to each other. As described below, the terminal rows 80 of the first and second module assemblies A1 and A2 arranged at positions relatively far apart from each other may be connected in series to each other through a second bus bar B2 extending relatively long in the first direction Z1. Also, the terminal rows 80 of the second and third module assemblies A2 and A3 arranged at positions relatively close to each other in the first direction Z1 may be connected in series to each other through a second bus bar B2 extending relatively short in the first direction Z1. In embodiments of the present disclosure, the first to third module assemblies A1, A2, and A3 arranged in the first direction Z1 may be arranged in orientations reversed to each other, and thus, it may be possible to simplify the structure of bus bars that electrically connect the first to third module assemblies A1, A2, and A3 to each other. This is described below in more detail.

Hereinafter, electrical connections of the battery pack 100 according to embodiments of the present disclosure is described. The battery pack 100 according to the present disclosure may include nine battery modules M arranged in the first and third directions Z1 and Z3, and the nine battery modules M may be electrically connected to each other by the first and second bus bars B1 and B2. In embodiments of the present disclosure, the battery modules M having different polarities in the nine battery modules M may be connected in series to each other. The nine battery modules M arranged in the first and third directions Z1 and Z3 may be connected in series to each other by first bus bars B1 extending in the third direction Z3 and second bus bars B2 extending in the first direction Z1. In an implementation, each of the first bus bars B1 may extend in the third direction Z3 and electrically connect different battery modules M to each other which may be arranged in the third direction Z3 and belong to the identical module assembly A, and each of the second bus bars B2 may extend in the first direction Z1 and electrically connect different battery modules M to each other which belong to the first to third module assemblies A1, A2, and A3 arranged in the first module assembly A1. In embodiments of the present disclosure, the first bus bar B1 may include a plurality of first bus bars B1 having equal lengths and extending in the third direction Z3. The second bus bar B2 may include a second bus bar B2 extending relatively long in the first direction Z1 to electrically connect the terminal rows 80 of the first and second module assemblies A1 and A2 to each other and a second bus bar B2 extending relatively short in the first direction Z1 to electrically connect the terminal rows 80 of the second and third module assemblies A2 and A3 to each other.

Hereinafter, the electrical connections between the nine battery modules M forming the battery pack 100 are described in more detail.

In embodiments of the present disclosure, the battery pack 100 may include the first to third module assemblies A1, A2, and A3 arranged in the first direction Z 1, and each of the first to third module assemblies A1, A2, and A3 may include three battery modules M arranged in the third direction Z3. In embodiments of the present disclosure, the three battery modules M forming the module assembly A may be connected in series to each other, and to this end, the three battery modules M forming the module assembly A may be electrically connected to each other by the first bus bars B1 extending in the third direction Z3. As described above, in embodiments of the present disclosure, the plurality of battery modules M arranged in the third direction Z3 to form an identical module assembly A for each of the first to third module assemblies A1, A2, and A3 may be connected in series to each other by the first bus bars B1 extending in the third direction Z3. In an implementation, in order to form an identical module assembly A, each of the module assemblies A may include two first bus bars B1 that extend in the third direction Z3 between three battery modules M arranged in the third direction Z3. In an implementation, the first bus bars B1 may extend in the third direction Z3 and electrically connect the input/output terminals 80 of different battery modules M that may be adjacent to each other in the third direction Z3 and have opposite polarities. Therefore, different battery modules M forming an identical module assembly A may be connected in series to each other.

As described above, the first to third module assemblies A1, A2, and A3, which may be arranged in the first direction Z1, each may include the battery modules M connected in series to each other in the third direction Z3 and may also be connected in series to each other. In an implementation, in the first to third module assemblies A1, A2, and A3 in which the module assemblies A adjacent to each other may be arranged in orientations reversed to each other in the first direction Z1, different polarities may be connected in series to each other by the second bus bars B2 extending in the first direction Z1. In an implementation, the second bus bars B2 may include a total of two second bus bars B2, such as one second bus bar B2 connecting the first and second module assemblies A1 and A2 in series to each other and another second bus bar B2 connecting the second and third module assemblies A2 and A3 in series to each other.

The battery pack 100 according to embodiments of the present disclosure may include a total of nine battery modules M arranged in the first and third directions Z1 and Z3 and connected in series to each other. The battery pack 100 may include the first bus bars B1 extending in the third direction Z3 and the second bus bars B2 extending in the first direction Z1, and a total of nine battery modules M connected in series to each other may be provided. In an implementation, the first bus bars B1 may include a total of six first bus bars B1 formed by two for each of the first to third module assemblies A1, A2, and A3, and the second bus bars B2 may include two second bus bars B2 that connect the input/output terminals 80 to each other in series which have opposite polarities adjacent to each other between the first to third module assemblies A1, A2, and A3. Also, the second bus bars B2 may include a total of two second bus bars B2 to connect different module assemblies A, such as one second bus bar B2 formed between the first and second module assemblies A1 and A2 and another second bus bar B2 formed between the second and third module assemblies A2 and A3. In an implementation, the first bus bars B1 may extend in the third direction Z3 and may have substantially the same length while connecting the input/output terminals 80 having opposite polarities of adjacent battery modules M to each other. The second bus bar B2 may include a second bus bar B2 extending long to connect the terminal rows 80 of the first and third module assemblies A1 and A3 to each other which may be arranged at positions relatively far apart from each other in the first direction Z1 and a second bus bar B2 extending short to connect the terminal rows 80 of the second and third module assemblies A2 and A3 to each other which may be arranged at positions relatively close to each other in the first direction Z1.

In embodiments of the present disclosure, the first to third module assemblies A1, A2, and A3 that may be different from each other and arranged in the first direction Z1 may be arranged in orientations in which adjacent module assemblies A may be reversed to each other. In an implementation, the first and third module assemblies A1 and A3 that may not be adjacent to each other in the first direction Z1 may be arranged in the same orientation in the first direction Z1. Therefore, the first holders H1 of the first and third module assemblies A1 and A3 may be arranged in the same orientation, and the second holders H2 of the first and third module assemblies A1 and A3 may also be arranged in the same orientation. However, the second module assembly A2 between the first and third module assemblies A1 and A3 in the first direction Z1 may be located in an orientation reversed to those of the first and third module assemblies A1 and A3. In an implementation, the first holders H1 of the first and second module assemblies A1 and A2 adjacent to each other may be arranged in orientations opposite to each other, and the second holders H2 of the first and second module assemblies A1 and A2 adjacent to each other may also be arranged in orientations opposite to each other. As described above, the module assemblies A adjacent to each other may be arranged in the opposite orientations, and thus, the structures of the bus bars (corresponding to the second bus bars B2) connecting the different module assemblies A may be simplified.

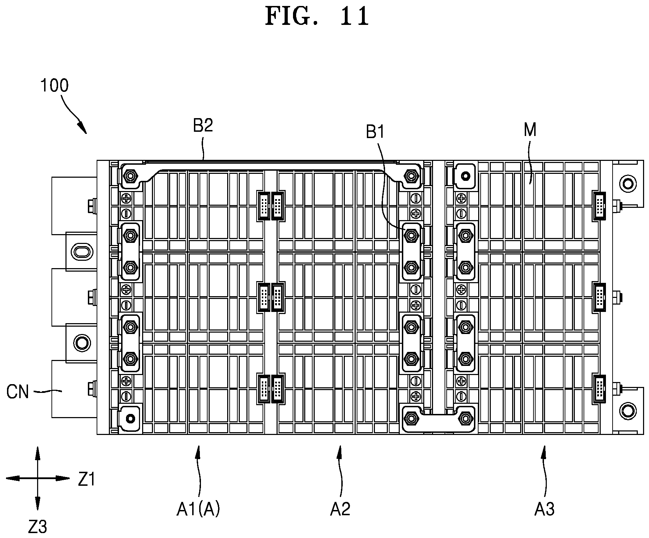

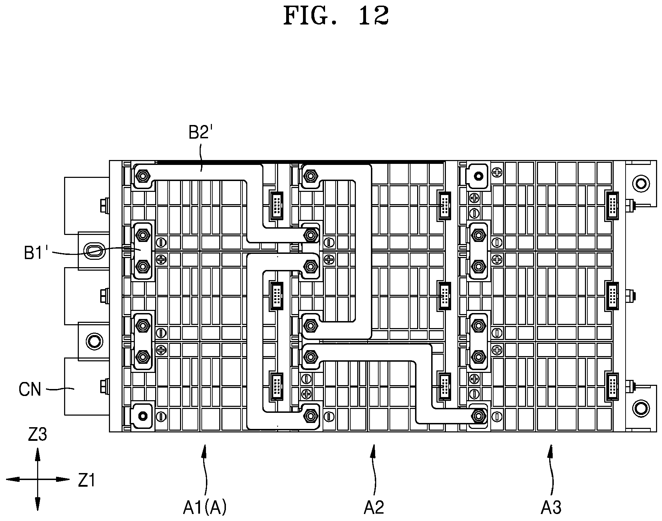

FIG. 11 is a view showing electrical connections established by bus bars B1 and B2 in embodiments of the present disclosure. FIG. 12 is a view showing electrical connections established by bus bars B1' and B2' in a comparative example compared with the present disclosure.

The structures of the second bus bars B2, which serially connect the module assemblies A adjacent to each other in the first direction Z1, may have different configurations in embodiments of the present disclosure in FIG. 11 and in the comparative example in FIG. 12. In embodiments of the present disclosure including the module assemblies A arranged in reversed orientations in the first direction Z1 as illustrated in FIG. 11, the second bus bar B2 may have a shape simply extending in the first direction Z1. However, in the comparative example including the module assemblies A arranged in the same orientation in the first direction Z1 as illustrated in FIG. 12, it may be desirable that the second bus bar B2' has a somewhat complicated shape following the first and third directions Z1 and Z3 rather than simply extending in the first direction Z1. In embodiments of the present disclosure illustrated in FIG. 11, the first to third module assemblies A1, A2, and A3 arranged in the first direction Z1 may be arranged in orientations reversed to each other, and thus, the first to third module assemblies A1, A2, and A3 may be connected in series to each other by the second bus bars B2 having a simple shape and extending in the first direction Z1. However, in the comparative example illustrated in FIG. 12, the first to third module assemblies A1, A2, and A3 may be arranged in the same orientation in the first direction Z1, and thus, it may be desirable that the first to third module assemblies A1, A2, and A3 should be connected in series to each other by the second bus bars B2' having a somewhat complicated shape and following the first and third directions Z1 and Z3.

Referring to FIG. 2, in the battery pack 100 according to embodiments of the present disclosure, the plurality of battery modules M arranged in the first and third directions Z1 and Z3 may be electrically connected to each other using the first and second bus bars B1 and B2. Also, in embodiments of the present disclosure, the reinforcing frames F between the first to third module assemblies A1, A2, and A3 in the first direction Z1 and the first and second end frames E1 and E2 respectively arranged outside the first and third module assemblies A1 and A3 in the first direction Z1 may provide coupling rigidity between the battery modules M adjacent to each other in the first and third directions Z1 and Z3.

In embodiments of the present disclosure, the end frames E and the reinforcing frames F may form the frames F and E providing physical rigidity in the battery pack 100 according to embodiments of the present disclosure. Throughout this specification, the frames F and E may comprehensively refer to the end frames E and the reinforcing frames F. Hereinafter, the coupling rigidity provided by the frames F and E between the battery modules M adjacent to each other in the first and third directions Z1 and Z3 is described.

Referring to FIGS. 4, 6, and 19, in embodiments of the present disclosure, an insertion portion, into which the discharge duct D of the battery module M may be inserted, may be formed in each of the frames F and E. In the frames F and E, the discharge ducts D of the different battery modules M adjacent to the frames F and E may be inserted into the insertion portions of the frames F and E, and thus, the relative positions between the different battery modules M adjacent to the frames F and E may be fixed by the frames F and E. The rigidity of the battery pack 100 including the different battery modules M may be provided by the frames F and E. In embodiments of the present disclosure, the fact that the frames F and E provide the relative positions between the different battery modules M forming the battery pack 100 may represent that the frames F and E provide structural rigidity of the battery pack 100. In embodiments of the present disclosure, the fact that the relative positions of the different battery modules M may be fixed despite the bending or twisting due to the weight of the battery pack 100 or external impact may represent that the structural rigidity of the battery pack 100 capable of resisting deformation, such as bending or twisting, due to the weight of the battery pack 100 or external impact may be provided.

Hereinafter, the fitting between the insertion portions formed in the frames F and E and the discharge ducts D of the battery modules M are described in more detail with reference to FIGS. 4, 6, and 10. Referring to FIGS. 4, 6, and 10, a stopper P, which may come into contact with an end of the discharge duct D to define an assembling position of the discharge duct D in the first direction Z1, may be formed in the insertion portion of each of the frames F and E. In an implementation, the stopper P of the frames F and E may have a quadrangular rim shape along the circumference of the end of the discharge duct D so as to come into contact with the end of the discharge duct D. In an implementation, while the end of the stopper P of the frames F and E and the discharge duct D come into contact with each other, a communication hole FH formed inside the stopper P and the flow path section S3 of the discharge duct D may be fluidly connected to each other. Also, the discharge path crossing the frames F and E in which the stoppers P may be formed may be formed in the first direction Z1.

A stepped portion ST may be formed around the stopper P to prevent the discharge duct D from moving. In an implementation, in order to prevent the discharge ducts D, which may be arranged on both sides of the stopper P and face each other with the stopper P therebetween, from moving in the second and third directions Z2 and Z3, the stepped portions ST may be formed to surround at least a portion of the discharge ducts D arranged on both sides of the stopper P in the first direction Z1. In an implementation, the stepped portion ST may be provided in a stepped structure between the stopper P and a rib R surrounding at least a portion of the stopper P. In embodiments of the present disclosure, the first and second side walls T1 and T2 of the accommodation tank T may include inclined surfaces converging toward the discharge ducts D in the first direction Z1, and the end of the discharge duct D and the stepped portion ST may be aligned with each other by the inclined surfaces. Therefore, the discharge duct D and the stepped portion ST may be easily assembled. The discharge ducts D arranged on both sides of the stopper P may be supported by the stepped portions ST formed around the stopper P and may be fluidly connected to each other through the communication hole FH formed inside the stopper P. Therefore, it may be possible to form the discharge path that crosses the frames F and E in which the stoppers P may be formed.

In embodiments of the present disclosure, by fixing the positions of the discharge ducts D which may be inserted such that different battery modules M belonging to an identical module assembly A facing the frames F and E match the arrangement of the insertion portions formed in the frames F and E, it may be possible to fix the relative positions of different battery modules M belonging to the identical module assembly A to each other.

In embodiments of the present disclosure, through a structure in which the discharge ducts D arranged on both sides of the frame F in the first direction Z1 may be commonly fitted into the insertion portion formed in the frame F, the relative positions of the different battery modules M may be fixed with respect to the insertion portion of the frame F. In embodiments of the present disclosure, the frame F may be located between adjacent battery modules M arranged in the first direction Z1, and the relative positions between the adjacent battery modules M may be fixed by the frame F (the insertion portion of the frame F).

In embodiments of the present disclosure, the frame F may include first and second surfaces opposite to each other. In different battery modules M facing the first surface of the frame F, which may be the different battery modules M forming an identical module assembly A, the relative positions of the different battery modules M forming the identical module assembly A may be fixed by fixing the positions of the discharge ducts D inserted toward the first surface of the frame F. Similarly, in different battery modules M facing the second surface of the frame F, which may be the different battery modules M forming an identical module assembly A, the relative positions of the different battery modules M forming the identical module assembly A may be fixed by fixing the positions of the discharge ducts D inserted toward the second surface of the frame F. Also, in the battery modules M facing the first and second surfaces of the frame F which may be opposite to each other, the relative positions of the battery modules M arranged on opposite sides of the frame F may be fixed by the discharge ducts D which may be inserted into the identical insertion portion of the frame F toward the first and second surfaces of the frame F, respectively. As described above, with respect to one frame F, the relative positions of the battery modules M (different battery modules M forming an identical module assembly A) facing the first surface of the frame F may be fixed by the discharge ducts D inserted toward the first surface of the frame F. Also, the relative positions of the battery modules M (different battery modules M forming an identical module assembly A) facing the second surface of the frame F may be fixed by the discharge ducts D inserted toward the second surface of the frame F. The discharge ducts D inserted toward the first and second surfaces of the frame F opposite to each other may be inserted into an identical insertion portion of the frame F, and thus, the relative positions of the battery modules M arranged on opposite sides of the frame F may be fixed. Consequently, the relative positions of the different battery modules M arranged around the frame F may be fixed, and the relative positions between the different battery modules M forming the entire battery pack 100 may be fixed. Therefore, it may be possible to improve the coupling rigidity of the entire battery pack 100.

In embodiments of the present disclosure, in each of the battery modules M, the discharge ducts D formed at positions facing each other in the accommodation tank T may include a pair of discharge ducts D formed to face each other in the first direction Z1 and may form a flow of the cooling fluid that passes through the battery module M in the first direction Z1. The discharge ducts D formed in each of the battery modules M may be fluidly connected to each other to form the discharge path that passes through the plurality of battery modules M arranged in the first direction Z1. In embodiments of the present disclosure, the discharge path may be formed to pass through the plurality of battery modules M, and the flow of the cooling fluid discharged through the plurality of battery modules M may be collected on the discharge path. In embodiments of the present disclosure, the discharge ducts D of battery modules M adjacent to each other in the first direction Z1 may be fluidly connected to each other through the communication hole FH of the frame F between the adjacent battery modules M, and thus, the discharge path crossing the battery pack 100 may be formed in the first direction Z1. In embodiments of the present disclosure, the fact that the discharge path may be formed across the battery pack 100 may not represent that the discharge path may be formed to pass through the battery pack 100 in the first direction Z1, but rather may represent that the discharge ducts D of the battery modules M forming the battery pack 100 may be fluidly connected to each other through the discharge path. The cooling fluid discharged from each of the battery modules M through the discharge ducts D may be collected on the discharge path and discharged to the outside of the battery pack 100 along the discharge path. As described below, one of one end and another end of the discharge path in the first direction Z1 may be open, and the other one may be closed (see FIG. 10).

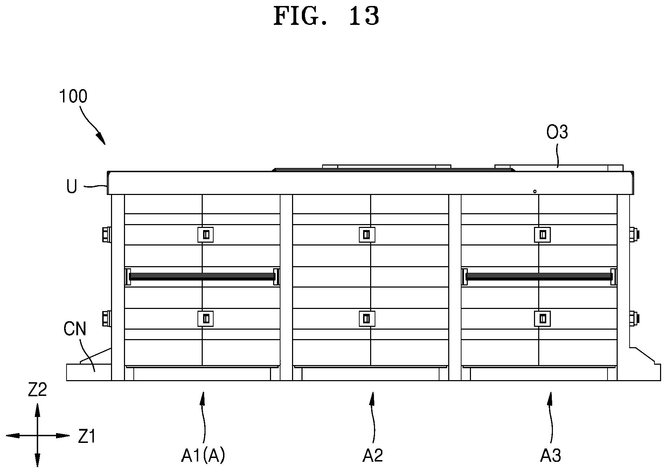

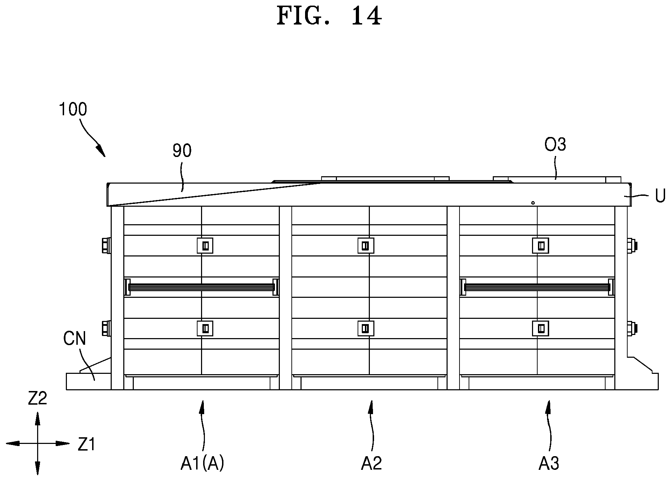

FIG. 13 is a view for explaining overall flow of a cooling fluid in the battery pack 100 according to embodiments of the present disclosure. FIG. 14 is a view for explaining overall flow of a cooling fluid in a battery pack 100 according to other embodiments of the present disclosure.

Referring to FIG. 13, in embodiments of the present disclosure, a fluid pump may be connected to one of one end and another end of the discharge path along the discharge path. In an implementation, the fluid pump may be provided as a blow type or a suction type. The fluid pump connected to the discharge path may form a flow of cooling fluid from one end of the discharge path toward another end of the discharge path or may form a flow of cooling fluid from another end of the discharge path toward one end of the discharge path. As described below, the fact that the fluid pump forms the flow of the cooling fluid from one end to another end of the battery pack 100 or forms the flow of the cooling fluid from another end to one end of the battery pack 100 may not represent that the fluid pump forms the discharge path connecting one end to another end of the battery pack 100, but rather may represent that the fluid pump forms the flow of the cooling fluid extending across the battery pack 100 overall.

Referring to FIGS. 2 and 4, in embodiments of the present disclosure, the frame F may include the reinforcing frames F each having the communication hole FH for allowing a fluid connection between the battery modules M arranged on both sides of the frames F and E and the pair of end frames E arranged on the outside of both sides of the battery modules M in the first direction Z1. The pair of end frames E may form one end and another end of the discharge path that extends across the plurality of battery modules M constituting the battery pack 100. Among the pair of end frames E, a first end frame E1 may form one open end of the discharge path and a second end frame E2 may form a closed another end of the discharge path. In an implementation, the first end frame E1 may have a connection duct CN fluidly connected to the discharge path, and the second end frame E2 may not include a hole fluidly connected to the discharge path. In an implementation, the first end frame E1 may form an open end of the discharge path and may include the connection duct CN to which the fluid pump may be connected. The fluid pump connected to the connection duct CN forming one open end of the discharge path may be of a suction type that provides negative pressure. The open end of the discharge path may include an outlet, and a cover opening O3 formed in a cover housing U of the battery pack 100 may include an inlet. Therefore, the cooling fluid flowing in from the cover opening O3 may flow out through the open end of the discharge path while passing through the battery pack 100 in a diagonal direction. In an implementation, in each of the battery modules M forming the battery pack 100, the flow of the cooling fluid formed to pass through each of the battery modules M in the second direction Z2 through the cover housing U may be collected to the discharge path through the discharge ducts D of the accommodation tank T, and the flow of the cooling fluid may be discharged to the outside of the battery pack 100 through the open end (the connection duct CN) of the discharge path.

In embodiments of the present disclosure, the cover housing U, which functions as the inlet of the battery pack 100, and the connection duct CN, which forms the open end of the discharge path functioning as the outlet of the battery pack 100, may be formed at positions facing each other in a diagonal direction of the battery pack 100. In an implementation, the inlet (the cover housing U) and the outlet (the connection duct CN) of the battery pack 100 may be respectively formed at positions facing each other in a diagonal direction across the battery pack 100 or respectively formed at one upper end position of the battery pack 100 and another lower end position of the battery pack 100. As described above, in embodiments of the present disclosure, through the inlet and the outlet formed at positions facing each other in the diagonal direction of the battery pack 100, the flow of cooling fluid extending across the battery pack 100 and cooling the battery pack 100 overall may be formed.

Hereinafter, in embodiments of the present disclosure, a fastening structure of the battery pack 100 is described with reference to FIGS. 2, 3, and 7.

In embodiments of the present disclosure, the plurality of battery modules M arranged in the first direction Z1 may be structurally coupled to each other by fastening members C that extend in the first direction Z1. In an implementation, in embodiments of the present disclosure, the battery pack 100 may include the plurality of battery modules M arranged in the first direction Z1 and the frames F and E arranged adjacent to the battery modules M in the first direction Z1. In embodiments of the present disclosure, the frames F and E may include the reinforcing frames F each being located between battery modules M adjacent to each other in the first direction Z1 and the pair of end frames E arranged on the outside of both sides of the battery modules M in the first direction Z1. In embodiments of the present disclosure, as the fastening members C pass through and may be fastened to the plurality of battery modules M and the frames F and E arranged in the first direction Z1, the plurality of battery modules M and the frames F and E arranged in the first direction Z1 may be structurally bound into one battery pack 100. In an implementation, the plurality of battery modules M and the frames F and E, which may be arranged in the first direction Z1, may have fastening holes CH through which the fastening members C pass, and the battery modules M and the frames F and E, in which the fastening holes CH may be formed at positions facing each other in the first direction Z1, may be coupled to each other through the fastening members C. In embodiments of the present disclosure, each of the fastening members C may extend in the first direction Z1 and may pass through the entire length of the battery pack 100. In embodiments of the present disclosure, the fastening member C may include a bolt member having a head at one end and a nut member coupled to another end of the bolt member. The fastening members C may include different fastening members C that pass through the plurality of battery modules M and the frames F and E together at different positions on a plane formed by the second and third directions Z2 and Z3 perpendicular to the first direction Z1. In embodiments of the present disclosure, the fastening member C may continuously pass through the first to third module assemblies A1, A2, and A3 arranged in the first direction Z1 and may include two fastening members C passing through each of the three battery modules M forming each of the module assemblies A. Therefore, the fastening members C may include a total of six fastening members C.

The fastening members C may be formed to pass through the entire length of the battery pack 100 in the first direction Z1, thereby providing rigidity to the battery pack 100 and simultaneously providing fastening force between the frames F and E and the plurality of battery modules M arranged in the first direction Z1. Regarding the fastening of the fastening members C, the fastening holes CH passing through the battery module M may be formed at empty positions of the battery cell 10, at which the battery cells 10 may not be arranged in each of the battery modules M. In a implementation, the empty positions of the battery cells 10 may be formed at a central position of the upper four battery cells 10 and a central position of the lower four battery cells 10 in the second direction Z2, and thus, two fastening holes CH may be formed in each of the battery modules M. Also, the fastening holes CH may also be formed at positions of the frames F and E corresponding to the empty positions of the battery cells 10. In an implementation, a total of 6 fastening holes CH may be formed in each of the frames F and E. There may be three battery modules M each having two fastening holes CH formed at upper and lower positions in the second direction Z2, and thus, a total of six fastening holes CH may be formed.

The frames F and E may include reinforcing ribs RR that extend, while forming a grid pattern, in the second and third directions Z2 and Z3 across the fastening holes CH and surround the fastening holes CH. The reinforcing ribs RR may provide rigidity to the frames F and E while extending in a grid pattern and may prevent breakage of the fastening holes CH while surrounding the fastening holes CH. In embodiments of the present disclosure, the frames F and E may include the reinforcing frames F each being located between battery modules M adjacent to each other in the first direction Z1 and the pair of end frames E formed at both end positions of the battery pack 100 in the first direction Z1. In an implementation, the end frames E may include the first end frame E1 located at one end of the battery pack 100 and the second end frame E2 located at another end of the battery pack 100. In an implementation, the first end frame E1 forming the open end of the discharge path among the first and second end frames E1 and E2 may include the connection duct CN that may be fluidly connected to the discharge ducts D of the adjacent battery modules M. The connection duct CN may protrude toward the outside of the battery pack 100 in the first direction Z1, and a fluid pump may be connected to the connection duct CN to form a pressure difference, thereby forcing the flow of the cooling fluid in one direction along the discharge path.

In embodiments of the present disclosure, among the first end frame E1 at one end and the second end frame E2 at another end along the discharge path, the first end frame E1 having the connection duct CN connected to the fluid pump may be fluidly connected to an adjacent discharge duct D, but the second end frame E2 may not be fluidly connected to an adjacent discharge duct D. In an implementation, the second end frame E2 may not have an open structure to be connected to an adjacent discharge duct D, and a position, facing the adjacent discharge duct D, of the second end frame E2 may be formed as a closed wall surface.

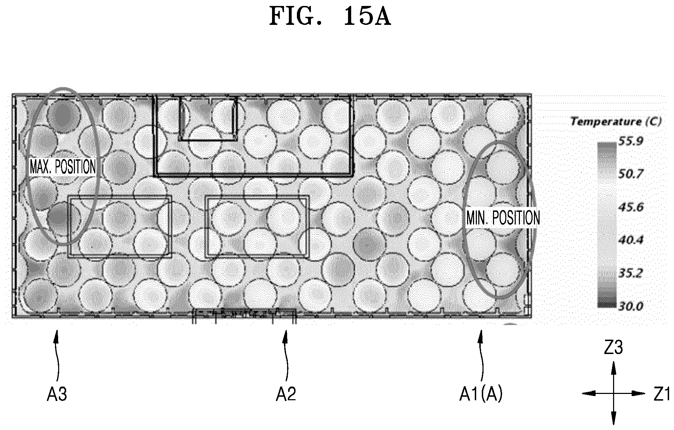

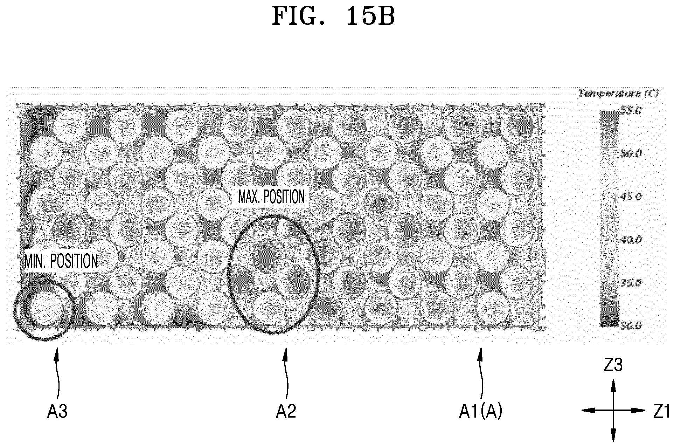

FIG. 13 and 15A are views showing a battery pack 100 according to embodiments of the present disclosure and a temperature distribution of the battery pack 100. FIG. 14 and 15B are views showing a battery pack 100 according to modified embodiments of the present disclosure and a temperature distribution of the battery pack 100.

Referring to FIGS. 13 to 15B, a flow of cooling fluid may be formed in the battery pack 100, and this flow may cross the battery pack 100 in a substantially diagonal direction using the cover opening O3, which may be formed in the cover housing U and serves as an inlet, and the connection duct CN, to which a fluid pump may be connected and which serves as an outlet. In an implementation, the cooling fluid flowing in through the cover opening O3 may flow across upper portions of the plurality of battery modules M arranged in the first direction Z1. Also, a cooling fluid may branch from the cooling fluid that flows in the first direction Z1 and may cool the battery modules M while passing through each of the battery modules M in the second direction Z2. The cooling fluid may be collected in the discharge path through the discharge duct D of each of the battery modules M and then discharged to the outside of the battery pack 100. In embodiments of the present disclosure shown in FIGS. 13 and 15A, the flow of the cooling fluid may be formed in the diagonal direction using the cover opening O3 as an inlet and the connection duct CN as an outlet. It may be confirmed that the highest temperature of the battery cell 10 occurs at an end position of the battery pack 100 that may be out of the flow of the cooling fluid formed in the diagonal direction, or at a position of another end of the battery pack 100 opposite to one end of the battery pack 100 at which the connection duct CN may be formed or at a position of another end of the battery pack 100 at which the cover opening O3 may be formed. Also, it may be confirmed that a temperature difference between the highest temperature of the battery cell 10 and the lowest temperature of the battery cell 10 may be about 10 degrees.

Unlike the above, in the modified embodiments of the present disclosure shown in FIGS. 14 and 15B, an inclined surface structure 90 including an inclined surface for naturally converting the flow in the first direction Z1 to the second direction Z2 may be installed at a position of one end of the battery pack 100, to which the connection duct CN may be connected, or at a position of one end opposite to another end of the battery pack 100, at which the cover opening O3 may be formed and between the cover housing U and the battery module M. The inclined surface structure 90 may form pressure that hinders the cooling fluid flowing in through the cover opening O3 from flowing in the first direction Z1 and may form a pressure distribution that can convert the cooling fluid flowing in through the cover opening O3 into the second direction Z2 directly toward the battery module M near the cover opening O3. Therefore, the temperature of the battery cells 10 may be lowered at another end of the battery pack 100 near the cover opening 03, and it may be confirmed that the highest temperature occurs at a substantially central position of the battery pack 100, not at a position of another end of the battery pack 100 in the first direction Z1. In an implementation, it may be confirmed that the temperature difference between the highest temperature and the lowest temperature of the battery cell 10 may be about 5 degrees that is about half of the about 10 degrees in the embodiments of the present disclosure shown in FIGS. 13 and 15A. As described above, in the modified embodiments of the present disclosure, depending on design of the positions of the inlet and outlet of the battery pack 100, the inclined surface structure 90 may be installed at the end of the battery pack 100, at which the inlet or outlet may formed, in order to force the flow of the cooling fluid to a position deviating from the flow of the cooling fluid formed between the inlet and outlet of the battery pack 100 in a diagonal direction. Therefore, it may be possible to form a forced flow of the cooling fluid toward the battery modules M arranged near the inlet or outlet at which the flow of the cooling fluid may be relatively weak, thereby lowering the maximum temperature of the battery cell 10 and reducing the temperature difference between the maximum temperature and the minimum temperature.

The present disclosure includes a battery module including a plurality of battery cells and a battery pack including a plurality of battery modules, wherein the battery module and the battery pack may be provided with a structure for flowing cooling fluid and removing condensed water.

Also, the present disclosure includes a battery module including a plurality of battery cells and a battery pack including a plurality of battery modules, wherein the battery module and the battery pack may simplify an electrical connection.

Also, the present disclosure includes a battery module including a plurality of battery cells and a battery pack including a plurality of battery modules, wherein the battery module and the battery pack may reduce temperature deviation according to locations and exhibit uniform cooling performance.

By way of summation and review, a small mobile device, such as a mobile phone, may operate for a certain period of time with only the output and capacity of a single battery. However, when use for a long period of time and high power may be required, such as in a large-sized mobile device that includes a laptop or an electric vehicle or a hybrid vehicle that consumes a lot of power, a pack type including a plurality of batteries may be preferred due to the output and capacity thereof. Also, the output voltage or output current may be increased according to the number of batteries embedded therein.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the appended claims.

## Claims

1. A battery module (M) comprising:
a plurality of battery cells (10) each having two ends (10a, 10b) and a side surface in a first direction (Z1) between the two ends (10a, 10b); and
a case (50) configured to accommodate the plurality of battery cells (10),
wherein the case (50) includes:
first and second holders (H1, H2) coupled to and facing each other with the plurality of battery cells (10) therebetween,
an accommodation tank (T) that is attached to the first and second holders (H1, H2) and has an accommodation section (S4) oriented in a second direction (Z2) toward the side surface of each of the battery cells (10), and
flow path sections (S1, S2, S3) that are different from each other and oriented in different directions.

2. The battery module (M) as claimed in claim 1, wherein the flow path sections (S1, S2, S3) include:
first and second openings (O1, O2) included in the first and second holders (H1, H2), respectively, and
discharge ducts (D) included in the accommodation tank (T).

3. The battery module (M) as claimed in claim 2, wherein:
the first and second openings (O1, O2) each includes one of the flow path sections (S 1, S2, S3) oriented in the second direction (Z2); and/or
the flow path sections (S 1, S2, S3) of the first and second openings (O1, O2) are parallel to the accommodation section (S4) of the accommodation tank (T); and/or
each of the discharge ducts (D) includes one of the flow path sections (S 1, S2, S3) oriented in the first direction (Z1).

4. The battery module (M) as claimed in claim 2 or 3, wherein:
each of the first and second holders (H1, H2) includes an upper plate and a lower plate which face each other in the second direction (Z2) with the plurality of battery cells (10) therebetween, and
the first and second openings (O1, O2) are in the upper plate and the lower plate, respectively.

5. The battery module (M) as claimed in claim 4, wherein:
the accommodation tank (T) is on and overlaps the lower plates of the first and second holders (H1, H2) in the second direction (Z2) to form a lower portion of the case; and/or
the first and second holders (H1, H2) include a pair of first openings (O1) included in the upper plate and a pair of second openings (O2) included in the lower plate, respectively.

6. The battery module (M) as claimed in any one of the preceding claims, wherein:
the flow path sections (S1, S2, S3) accommodate a flow of a cooling fluid, and
the accommodation section (S4) accommodates condensed water together with the flow of the cooling fluid.

7. The battery module (M) as claimed in any one of the preceding claims, wherein the accommodation tank (T) includes:
an upper portion that is open in the second direction (Z2) to provide the accommodation section (S4), and
a bottom wall that is closed;
wherein the bottom wall does optionally not have a drain for discharging condensed water.

8. The battery module (M) as claimed in claim 7, wherein:
the accommodation tank (T) further includes:
an upper flange (T5) surrounding the accommodation section (S4) and attached to the first and second holders (H1, H2), and
side walls (T1, T2) between the upper flange (T5) and the bottom wall, and
discharge ducts (D) are included, respectively, on first and second side walls (T1, T2) that face each other in the first direction (Z1), among the side walls,
wherein each of the first and second side walls (T1, T2) optionally includes an inclined surface structure (90) that converges toward the discharge ducts (D) of the respective first and second side walls (T1, T2) in the first direction (Z1).

9. The battery module (M) as claimed in any one of the preceding claims, further comprising first and second circuit boards (11a, 12a) that are respectively on a side of the first and second holders (H1, H2) opposite the battery cells (10) in the first direction (Z1), wherein first and second sub-bus bars (21, 22) optionally electrically connecting the battery cells (10) to each other are between the first and second holders (H1, H2) and the first and second circuit boards (11a, 12a), respectively.

10. The battery module (M) as claimed in any one of the preceding claims, wherein:
the plurality of battery cells (10) are in a plurality of columns and rows that respectively include columns in the second direction (Z2) and rows in a third direction (Z3) crossing the first and second directions (Z1, Z2), and
a number of columns in the second direction (Z2) is greater than a number of rows in the third direction (Z3).

11. The battery module (M) as claimed in claim 10, wherein:
the battery cells (10) in adjacent columns are in patterns reversed to each other in the first direction (Z1), and
the battery cells (10) in adjacent rows are in patterns reversed to each other in the first direction (Z1); and/or
wherein a row of terminals (80), which is electrically connected to the plurality of battery cells (10) to form a charge/discharge path and includes a pair of input/output terminals (80) of different polarities, is on the first holder (H1) among the first and second holders (H1, H2).

12. A battery pack (100) comprising a module assembly (A) in which the battery module (M) as claimed in any one of the preceding claims is provided in plurality and arranged in a third direction (Z3) crossing the first and second directions (Z1, Z2), wherein the module assembly (A) is optionally provided in plurality in the first direction (Z1).

13. The battery pack (100) as claimed in claim 12, further comprising a first bus bar (B1) that electrically connects adjacent battery modules (M) arranged in the third direction (Z3), wherein the first bus bar (B1) is optionally provided in plurality having lengths equal to each other and extending in the third direction (Z3).

14. The battery pack (100) as claimed in claim 12 or 13, wherein:
adjacent battery modules (M) in the third direction (Z3) are in a same orientation in the first direction (Z1), and
adjacent battery modules (M) in the first direction (Z1) are in orientations reversed to each other in the first direction (Z1).

15. The battery pack (100) as claimed in claim 14, wherein each of the adjacent battery modules (M) in the third direction (Z3) includes the first and second holders (H1, H2), which are in the same front position or the same rear position in the first direction (Z1), and
each of the adjacent battery modules (M) in the first direction (Z1) include first holders and second holders (H1, H2), which are in different front positions or different rear positions in the first direction (Z1).

16. The battery pack (100) as claimed in claim 14 or 15, wherein:
the module assembly (A) includes first, second, and third module assemblies (A1, A2, A3) in the first direction (Z1) and rows of terminals (80) extending the third direction (Z3),
the rows of terminals (80) of the first and the second module assemblies (A1, A2) are at relatively far apart positions from each other in the first direction (Z1), and
the rows of terminals (80) of the second and the third module assemblies (A2, A3) are at relatively close positions to each other in the first direction (Z1).

17. The battery pack (100) as claimed in claim 16, further comprising a second bus bar (B2) that extends in the first direction (Z1) and electrically connects adjacent module assemblies (A), among the first, second, and third module assemblies (A1, A2, A3), to each other,
wherein the second bus bar (B2) includes:
one second bus bar (B2) that extends relatively long in the first direction (Z1) to electrically connect the rows of terminals (80) of the first and the second module assemblies (A1, A2) to each other; and
another second bus bar (B2) that extends relatively short in the first direction (Z1) to electrically connect the rows of terminals (80) of the second and the third module assemblies (A2, A3) to each other.

18. The battery pack (100) as claimed in any one of claims 12 to 17, further comprising a frame that is located adjacent to the module assembly (A) in the first direction (Z1).

19. The battery pack (100) as claimed in claim 18, wherein the frame includes:
a reinforcing frame (F) located between module assemblies (A) adjacent to each other in the first direction (Z1); and
an end frame (E) located on the outside of an outermost module assembly (A) in the first direction (Z1).

20. The battery pack as claimed in claim 19, wherein the frame has an insertion portion into which discharge ducts (D) of adjacent battery modules (M) are inserted.

21. The battery pack (100) as claimed in claim 20, wherein the reinforcing frame (F) includes first and second surfaces opposite to each other, and the insertion portion passes through the first and second surfaces and is symmetrical on the first and second surfaces, and
the discharge ducts of the battery module (M) arranged on both sides of the reinforcing frame (F) are inserted into an identical insertion portion toward the first and second surfaces of the reinforcing frame.

22. The battery pack (100) as claimed in claim 21, wherein a group of battery modules (M) including the discharge ducts (D) inserted toward the first surface of the reinforcing frame (F) are arranged in the third direction (Z3), and
another group of battery modules (M) including the discharge ducts (D) inserted toward the second surface of the reinforcing frame (F) are arranged in the third direction (Z3).

23. The battery pack (100) as claimed in any one of claims 20 to 22, wherein the insertion portion of the frame includes:
a communication hole (FH) fluidly connected to a flow path section (S3) of the discharge duct (D);
a stopper (P) surrounding at least a portion of the communication hole (FH) and along a circumference of an end of the discharge duct (D); and
a rib (R) surrounding at least a portion of the stopper (P) and including a stepped portion (ST) offset from the stopper (P) in the first direction;
wherein the stepped portion (ST) optionally surrounds at least a portion of the discharge duct (D) and prevents movement of the discharge duct (D).

24. The battery pack (100) as claimed in claim 23, wherein the communication hole (FH) is fluidly connected to the flow path sections (S1, S2, S3) of the discharge ducts (D) on both sides of the reinforcing frame (F) in the first direction (Z1) and forms a discharge path that extends across the reinforcing frame (F) through which the communication hole (FH) passes in the first direction (Z1).

25. The battery pack as claimed in claim 24, wherein the discharge path includes an open end and a closed another end in the first direction (Z1), wherein the end frame (E) includes first and second end frames (E1, E2) which are respectively on an outside of opposite sides of the module assemblies (A1, A2, A3) in the first direction (Z1),
the first end frame (E1) includes the open end of the discharge path and includes a connection duct (CN) to which a fluid pump is connected, and
the second end frame (E2) includes the closed another end of the discharge path and does not include a hole connected to the discharge path.
